# EUROPEAN PATENT APPLICATION

(11) **EP 4 651 508 A1**
(43) Date of publication of application: **19.11.2025**
(21) Application number: 24756012.1
(22) Date of filing: 01.02.2024
(51) Int. Cl.: H04N 23/67

(54) **ZOOM RESPONSE METHOD, ELECTRONIC DEVICE, AND STORAGE MEDIUM**

(30) Priority: 13.02.2023 CN 202310136978
(71) Applicant: Honor Device Co., Ltd., Shenzhen, Guangdong 518040 (CN)
(72) Inventor: LI, Yue, Shenzhen, Guangdong 518040 (CN); XU, Lunbao, Shenzhen, Guangdong 518040 (CN); ZHANG, Yutong, Shenzhen, Guangdong 518040 (CN); ZHANG, Li, Shenzhen, Guangdong 518040 (CN)
(74) Representative: Epping - Hermann - Fischer
(86) International application number: PCT/CN2024/075232
(87) International publication number: WO 2024/169638

(57) **Abstract**

Embodiments of this application provide a zoom response method, an electronic device, and a storage medium. In this method, in response to a zoom operation of a user, the electronic device generates a preview image frame request that carries a zoom ratio value, where the zoom ratio value preferentially takes effect on preview image frame data generated based on previous exposure, thereby shortening an effectiveness link of the zoom ratio value, reducing a zoom response delay, and improving zoom operation experience of the user.

## Description

This application claims priority to Chinese Patent Application 202310136978.X, filed with the China National Intellectual Property Administration on February 13, 2023 and entitled "ZOOM RESPONSE METHOD, ELECTRONIC DEVICE, AND STORAGE MEDIUM", which is incorporated herein by reference in its entirety.

### TECHNICAL FIELD

This application relates to the field of smart terminal technologies, and in particular, to a zoom response method, an electronic device, and a storage medium.

### BACKGROUND

With development of smart terminals such as mobile phones and tablet computers, a photographing function is increasingly important to a user. The mobile phone is used as an example. To enable the user to obtain better photographing experience, a plurality of cameras with different focal lengths are generally disposed on the terminal, to shoot scenes at different distances.

When shooting scenes at different distances, the user may implement zoom (or referred to as focus) by using a related operation, to obtain a clear image or video. However, a system of the smart terminal such as the mobile phone may have a relatively high response delay to a zoom operation of the user. As a result, a time difference between the zoom operation of the user and a corresponding change of FOV (Field of View, field of view) in a shooting preview interface is relatively large. Consequently, user experience is poor.

### SUMMARY

To resolve the foregoing technical problem, embodiments of this application provide a zoom response method, an electronic device, and a storage medium. In this method, in response to a zoom operation of a user, the electronic device generates a preview image frame request that carries a zoom ratio value, where the zoom ratio value preferentially takes effect on preview image frame data generated based on previous exposure, thereby shortening an effectiveness link of the zoom ratio value, reducing a zoom response delay, and improving zoom operation experience of the user.

According to a first aspect, an embodiment of this application provides a zoom response method. The method is applied to an electronic device, and includes:
In a process in which the electronic device sequentially processes preview image frame requests based on a generation sequence to generate and display preview image frames, in response to a received zoom operation, the electronic device generates a first preview image frame request, where the first preview image frame request includes a first zoom ratio value, and is used to generate a first preview image frame; when performing spatial alignment processing on second preview image frame data to calculate cropping data, the electronic device calculates, based on the first zoom ratio value, first cropping data corresponding to the second preview image frame data, where the second preview image frame data is generated by controlling, in response to a second preview image frame request, a first camera to perform exposure, and a generation time of the second preview image frame request is earlier than a generation time of the first preview image frame request; and the electronic device performs cropping processing on the second preview image frame data based on the first cropping data, to obtain a second preview image frame corresponding to the second preview image frame request, and display the second preview image frame, where field of view of the second preview image frame matches the first zoom ratio value. The first zoom ratio value is a zoom ratio value that needs to take effect in advance.

In this way, a zoom ratio value corresponding to the first preview image frame request takes effect in advance on preview image frame data corresponding to the second preview image frame request, so that an effectiveness link of the zoom ratio value is shortened, and a zoom response delay is reduced. Therefore, a time difference between the zoom operation, that is of a user and that adjusts a preview interface of a camera application to a specific zoom ratio, and display of a preview image corresponding to the zoom ratio on a screen of the electronic device is relatively small, thereby improving zoom operation experience of the user.

According to the first aspect, a zoom ratio corresponding to the second preview image frame request is a second zoom ratio value, the second preview image frame data is obtained by performing preliminary cropping on raw exposure image frame data based on the second zoom ratio value, and that the electronic device calculates, based on the first zoom ratio value, first cropping data corresponding to the second preview image frame data may include: If it is determined, based on the first zoom ratio value, the second zoom ratio value, and the second preview image frame data, that target cropping can be completed on the second preview image frame data based on the first zoom ratio value, the first cropping data corresponding to the second preview image frame data is calculated based on the first zoom ratio value.

In either a Zoom In scenario or a Zoom Out scenario, when the zoom operation of the user relates to lens switching, a preview image frame obtained through exposure of an original lens (namely, a lens used for image exposure before lens switching) possibly cannot meet a new zoom ratio value. Therefore, the electronic device first determines whether current cropping can be completed based on the new zoom ratio value, to ensure smooth execution of a preview image data processing procedure.

According to the first aspect or any implementation of the first aspect, the method further includes: If it is determined, based on the first zoom ratio value, the second zoom ratio value, and the second preview image frame data, that target cropping cannot be completed on the second preview image frame data based on the first zoom ratio value, the electronic device obtains third preview image frame data that is collected by using a second camera and that corresponds to the second preview image request; and the electronic device calculates, based on the first zoom ratio value, second cropping data corresponding to the third preview image frame data, and performs cropping processing on the third preview image frame data based on the second cropping data, to obtain a third preview image frame corresponding to the second preview image frame request, and display the third preview image frame.

In this way, the electronic device performs an image exposure operation by using a plurality of cameras, to obtain a plurality of pieces of preview image frame data corresponding to a same preview image frame request. Therefore, when a zoom scenario relates to lens switching, a new zoom ratio value can take effect on preview image frame data collected by using a target camera, thereby resolving a problem that the new zoom ratio value cannot take effect in advance.

According to the first aspect or any implementation of the first aspect, the method further includes: In response to the zoom operation of the user, the electronic device enables the second camera. In this way, when the electronic device estimates that the first zoom ratio value needs to take effect in advance on image data collected by the second camera, the second camera is enabled in advance, to meet a condition that the first zoom ratio can take effect in advance.

According to the first aspect or any implementation of the first aspect, that the electronic device obtains third preview image frame data that is collected by using a second camera and that corresponds to the second preview image request includes: If the first zoom ratio value falls within a zoom range of the second camera, the electronic device obtains the third preview image frame data that is collected by using the second camera and that corresponds to the second preview image frame request.

In this way, if a zoom ratio value that needs to take effect in advance falls within a zoom range of another camera, the electronic device enables the target camera in advance, and performs an image exposure operation by using a plurality of cameras, to obtain a plurality of pieces of preview image frame data corresponding to a same preview image frame request. Therefore, a new zoom ratio value can take effect on preview image frame data collected by using the target camera, thereby resolving a problem that the new zoom ratio value cannot take effect in advance.

According to the first aspect or any implementation of the first aspect, that the electronic device obtains third preview image frame data that is collected by using a second camera and that corresponds to the second preview image request includes: If both the first zoom ratio value and the second zoom ratio value fall within a zoom range of the first camera, and the first zoom ratio value is less than the second zoom ratio value, the electronic device obtains the third preview image frame data that is collected by using the second camera and that corresponds to the second preview image frame request, where a zoom ratio value corresponding to the second camera is less than a zoom ratio value corresponding to the first camera.

In this way, in the Zoom out scenario, if both the first zoom ratio value and the second zoom ratio value fall within a zoom range of a same camera, the first zoom ratio value may take effect in advance on corresponding image data collected by the target camera with a smaller zoom ratio value, thereby shortening an effectiveness path of the first zoom ratio value, and reducing a response delay of the zoom operation.

According to the first aspect or any implementation of the first aspect, the method further includes: When the third preview image frame data that is collected by using the second camera and that corresponds to the second preview image frame request is not obtained, the electronic device calculates, based on a current zoom ratio value, third cropping data corresponding to the second preview image frame data, and performs cropping processing on the second preview image frame data based on the third cropping data, to obtain a fourth preview image frame corresponding to the second preview image frame request, and display the fourth preview image frame.

The current zoom ratio value is used to indicate a zoom ratio value that takes effect most recently from a current time. In a process of sequentially processing preview image frame requests based on a generation sequence to generate and display preview image frames, the current zoom ratio value is updated in real time. For example, after processing of the 1st preview image frame request is completed, and before processing of the 2nd preview image frame request is completed, the current zoom ratio value is a zoom ratio value that takes effect on image frame data corresponding to the 1st preview image frame request.

According to the first aspect or any implementation of the first aspect, the method further includes: If the first zoom ratio value is greater than the second zoom ratio value, and a difference between the first zoom ratio value and the second zoom ratio value is greater than a preset threshold, it is determined that target cropping cannot be completed on the second preview image frame data based on the first zoom ratio value.

According to the first aspect or any implementation of the first aspect, the method further includes: If the first zoom ratio value is less than the second zoom ratio value, and reserved margin data of the second preview image frame data cannot meet image field of view corresponding to the first zoom ratio value, the electronic device determines that target cropping cannot be completed on the second preview image frame data based on the first zoom ratio value.

According to the first aspect or any implementation of the first aspect, the electronic device includes a camera service and camera HAL, the camera HAL includes an interface module, a realtime pipeline processing module, and an offline pipeline processing module, the realtime pipeline processing module includes a sensor node and an IFE module, and the offline pipeline processing module includes an SAT module and an IPE module.

The camera service continuously generates preview image frame requests, and sends each preview image frame request to the camera HAL. After receiving each preview image frame request, the interface module in the camera HAL sends each preview image frame request to the sensor node. The sensor node sequentially controls, based on each preview image frame request, a camera to perform an exposure and image output operation. After receiving raw preview image frame data corresponding to each preview image frame request, the IFE module performs preliminary cropping on the raw preview image frame data based on a zoom ratio value corresponding to the preview image frame request, and then sends cropped preview image frame data to the SAT module. The SAT module performs spatial alignment processing on the received preview image frame data to calculate cropping data, and sends a cropping data calculation result to the IPE module. The IPE module performs target cropping processing on corresponding preview image frame data based on the cropping data calculation result, to obtain to-be-displayed preview image frame data. According to the first aspect or any implementation of the first aspect, the method further includes: After the interface module receives each preview image frame request, if the preview image frame request includes a zoom ratio value, the zoom ratio value is written into a target queue, where the target queue is a first-in first-out queue.

The target queue is used to store a zoom ratio value that needs to take effect in advance.

In this way, the target queue used to store a zoom ratio value that needs to take effect in advance is maintained globally, so that the following problem can be resolved: A speed at which the camera HAL receives a preview image frame request and a speed at which the Offline Pipeline processes a preview image frame request cannot be synchronized frame by frame.

According to the first aspect or any implementation of the first aspect, the method further includes: When performing spatial alignment processing on received fifth preview image frame data to calculate cropping data, if reading a third zoom ratio value from the target queue, the SAT module calculates, based on the third zoom ratio value, fourth cropping data corresponding to the fifth preview image frame data; and the IPE module performs target cropping processing on the fifth preview image frame data based on the fourth cropping data, to obtain a to-be-displayed fifth preview image frame.

According to the first aspect or any implementation of the first aspect, the method further includes: When performing spatial alignment processing on received fifth preview image frame data to calculate cropping data, if reading no zoom ratio value from the target queue, the SAT module calculates, based on a current zoom ratio value, fifth cropping data corresponding to the fifth preview image frame data; and the IPE module performs target cropping processing on the fifth preview image frame data based on the fifth cropping data, to obtain a to-be-displayed sixth preview image frame, where the fifth preview image frame data is obtained by the sensor node by controlling, based on a third preview image frame request, a third camera to perform exposure, and the current zoom ratio value is used to indicate a zoom ratio value that takes effect most recently from a current time.

According to the first aspect or any implementation of the first aspect, the fifth preview image frame data is obtained by the IFE module by performing, based on a fourth zoom ratio value corresponding to the third preview image frame request, preliminary trimming on raw exposure image frame data corresponding to the third preview image frame request; if the SAT module determines, based on the third zoom ratio value, the fourth zoom ratio value, and the fifth preview image frame data, that the IPE module cannot complete target cropping on the fifth preview image frame data based on the third zoom ratio value, the SAT module obtains seventh preview image frame data that is collected by using a fourth camera and that corresponds to the third preview image frame request; the SAT module calculates, based on the third zoom ratio value, sixth cropping data corresponding to the seventh preview image frame data; and the IPE module performs cropping processing on the seventh preview image frame data based on the sixth cropping data, to obtain a to-be-displayed seventh preview image frame corresponding to the third preview image frame request.

According to the first aspect or any implementation of the first aspect, if the third zoom ratio value falls within a zoom range of the fourth camera, the SAT module obtains the seventh preview image frame data that is collected by using the fourth camera and that corresponds to the third preview image frame request.

According to the first aspect or any implementation of the first aspect, if both the third zoom ratio value and the fourth zoom ratio value fall within a zoom range of the third camera, and the third zoom ratio value is less than the fourth zoom ratio value, the SAT module obtains the seventh preview image frame data that is collected by using the fourth camera and that corresponds to the third preview image frame request, where a zoom ratio value corresponding to the fourth camera is less than a zoom ratio value corresponding to the third camera.

According to the first aspect or any implementation of the first aspect, the electronic device further includes a multi-camera decision module, and the method further includes: In response to the zoom operation of the user, the multi-camera decision module controls the electronic device to enable the fourth camera in advance.

According to the first aspect or any implementation of the first aspect, the zoom operation includes an operation of tapping a zoom control, an operation of sliding the zoom control, and an operation of sliding the preview interface with two fingers.

When the zoom operation of the user is a sliding operation (for example, sliding the zoom control with one finger or sliding the preview interface with two fingers), reducing a zoom response delay of a system can effectively improve responsiveness of the zoom operation of the user. When the zoom operation of the user is a tap operation (for example, tapping the zoom control), shortening an effectiveness link of a zoom ratio value can effectively increase a response speed of a system to the zoom operation of the user.

According to a second aspect, an embodiment of this application provides an electronic device. The electronic device includes one or more processors, a memory, and one or more computer programs. The one or more computer programs are stored in the memory. When the computer programs are executed by the one or more processors, the electronic device is enabled to perform the zoom response method according to the first aspect and any implementation of the first aspect. The second aspect and any implementation of the second aspect respectively correspond to the first aspect and any implementation of the first aspect. For technical effects corresponding to the second aspect and the any implementation of the second aspect, refer to technical effects corresponding to the first aspect and the any implementation of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the zoom response method according to the first aspect and any implementation of the first aspect. The third aspect and any implementation of the third aspect respectively correspond to the first aspect and any implementation of the first aspect. For technical effects corresponding to the third aspect and any implementation of the third aspect, refer to technical effects corresponding to the first aspect and any implementation of the first aspect. Details are not described herein again. According to a fourth aspect, an embodiment of this application provides a computer program product, including a computer program. When the computer program is run, a computer is enabled to perform the zoom response method according to the first aspect or any implementation of the first aspect.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again. According to a fifth aspect, this application provides a chip, where the chip includes a processing circuit and a transceiver pin. The transceiver pin and the processing circuit communicate with each other by using an internal connection path, and the processing circuit performs the zoom response method according to the first aspect or any implementation of the first aspect, to control a receive pin to receive a signal and control a transmit pin to send a signal.

The fifth aspect and any implementation of the fifth aspect respectively correspond to the first aspect and any implementation of the first aspect. For technical effects corresponding to the fifth aspect and any implementation of the fifth aspect, refer to technical effects corresponding to the first aspect and any implementation of the first aspect. Details are not described herein again.

### BRIEF DESCRIPTION OF DRAWINGS

FIG. 1A(1)-FIG. 1D(3) are example schematic diagrams of application scenarios;
FIG. 2 is an example schematic diagram of a hardware structure of an electronic device;
FIG. 3 is an example schematic diagram of a software architecture of an electronic device;
FIG. 4 is an example schematic diagram of module interaction related to a zoom response procedure;
FIG. 5A and FIG. 5B show an example of a zoom response delay phenomenon;
FIG. 6 is an example schematic diagram of module interaction related to a zoom response method;
FIG. 7A-FIG. 7B are example schematic diagrams in which a zoom ratio value preferentially takes effect;
FIG. 8 is an example schematic diagram of a zoom ratio queue;
FIG. 9A-FIG. 9B show examples of comparison examples between image field of view ranges;
FIG. 10A-FIG. 10B are example schematic diagrams of module interaction existing when a multi-camera decision module enables a target camera in advance;
FIG. 10C is an example schematic diagram of exposing and transmitting image frame data when a plurality of cameras are enabled;
FIG. 11 is an example schematic diagram in which a zoom ratio value takes effect; and
FIG. 12A and FIG. 12B are an example schematic flowchart of processing preview image frame data by an SAT module in an Offline Pipeline.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by a person of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to represent giving an example, an illustration, or a description. Any embodiment or design solution described as "example" or "for example" in the embodiments of this application should not be explained as being preferred or advantageous over other embodiments or design solutions. Exactly, use of the word such as "example" or "for example" is intended to present a related concept in a specific manner.

In the description of the embodiments of this application, unless otherwise stated, "a plurality of" means two or more. For example, a plurality of processing units refer to two or more processing units, and a plurality of systems refer to two or more systems.

With development of a terminal technology and a semiconductor technology, to meet a shooting requirement of a user, disposing cameras with different focal lengths in a same terminal has become a trend in terminal development. Cameras with different focal lengths are disposed in a same terminal, so that the terminal can adjust FOV of a preview interface only by adjusting a zoom (zoom) ratio (or referred to as a zoom ratio, a ZoomRatio value, or the like), to implement an effect of zooming in or zooming out a scene.

The terminal may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a single-lens reflex camera or a card camera), or the like. A specific type of the terminal device is not limited in this application.

The following provides related description by using an example in which the terminal device is a mobile phone.

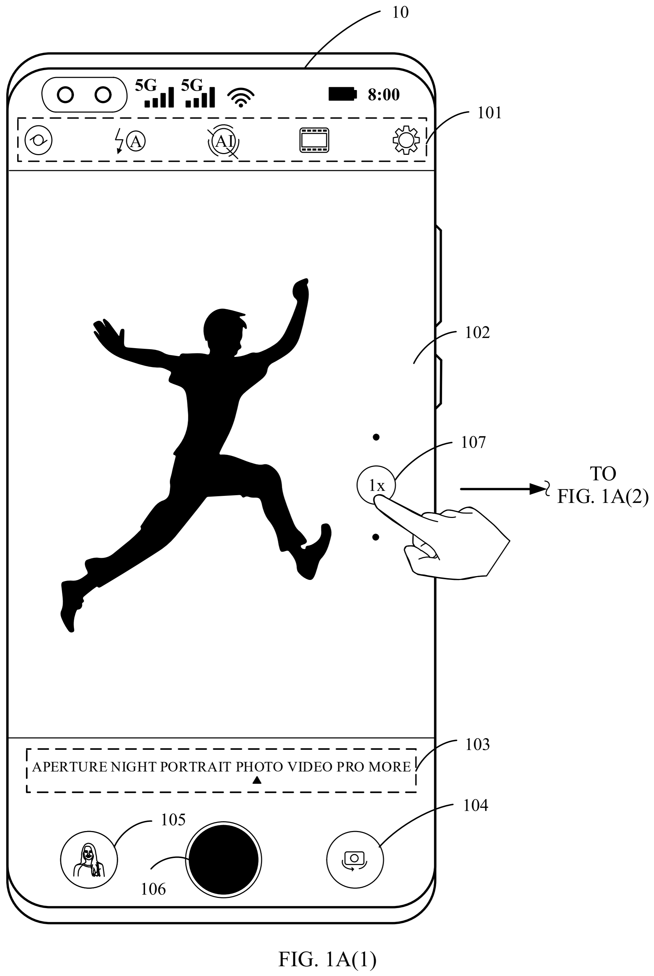

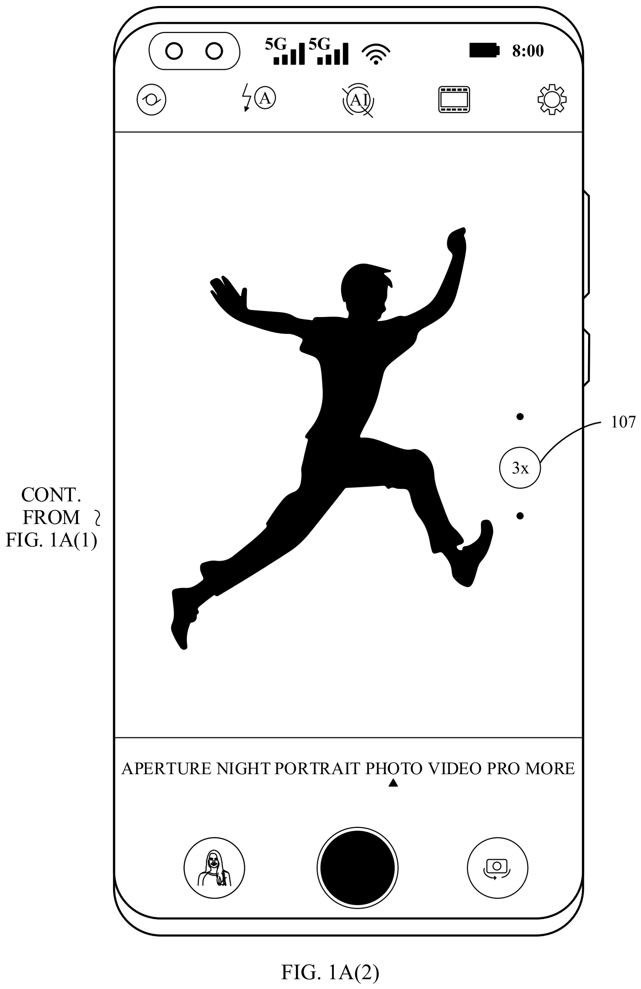

FIG. 1A(1) and FIG. 1A(2) show an example of an application scenario. It may be understood that the mobile phone detects a user operation (for example, a touch/tap operation) performed by a user on a camera application icon. In response to the operation, a shooting interface 10 shown in FIG. 1A(1) may be displayed. The shooting interface 10 may be a user interface of a default photo mode of a camera application. The user may complete photographing in the interface. The camera application is an image shooting application on an electronic device such as a smartphone or a tablet computer. A name of the application is not limited in this application. In other words, the user may open the shooting interface 10 of the camera application by tapping the camera application icon. It may be understood that a default camera in the default photo mode is not limited to a rear-facing camera, and the mobile phone may alternatively set a front-facing camera as the default camera. In other words, after the camera application is enabled, the mobile phone may display, in a preview region 102, an image collected by the front-facing camera. The image may be used by the user to perform photographing by using the default front-facing camera.

As shown in FIG. 1A(1), the shooting interface 10 may include a parameter adjustment region 101, a preview region 102, a camera mode option region 103, a gallery shortcut control 105, a camera flipping control 104, a shutter control 106, and a zoom control 107. Each control in the parameter adjustment region 101 is used to adjust a corresponding shooting parameter, including but not limited to a flash setting control, an AI recognition switch setting control, a color standard setting control, and a more detailed camera setting control. The preview region 102 may be used to display a preview image, and the preview image is an image collected by the mobile phone in real time by using a camera. The mobile phone may refresh display content in the preview region 102 in real time, so that the user previews an image collected by the camera currently. One or more shooting mode options may be displayed in the camera mode option 103. The one or more shooting mode options may include but are not limited to an aperture mode option, a night mode option, a portrait mode option, a photo mode option, a video mode option, a professional mode option, and a "more" option. It may be understood that the one or more shooting mode options may be presented as text information in the interface, such as "aperture", "night", "portrait", "photo", "video", "professional", "more", or may be presented as an icon or another form of interactive element (interactive element, IE). This is not limited in this application.

Still referring to FIG. 1A(1), the zoom control 107 is used to trigger the mobile phone to adjust a zoom ratio, so as to adjust FOV of a shooting preview interface 102. "1x" displayed on the zoom control 107 indicates that a current optical zoom ratio of the mobile phone is 1x ratio, and subsequent x indicates a zoom ratio.

In an example, as shown in FIG. 1A(1), the user taps the zoom control 107, and in response to the tap operation of the user on the zoom control 107, the mobile phone adjusts the current zoom ratio of the mobile phone. For example, the user taps the zoom control 107 to trigger the zoom ratio of the mobile phone to be adjusted from "1x" to "3x". As shown in FIG. 1A(2), in this case, the FOV of the shooting preview interface of mobile phone becomes smaller, and a shot scene in the shooting preview interface becomes larger. Similarly, the user may tap the zoom control 107 a plurality of times to adjust (increase or reduce) the current zoom ratio of the mobile phone a plurality of times based on a preset ratio difference.

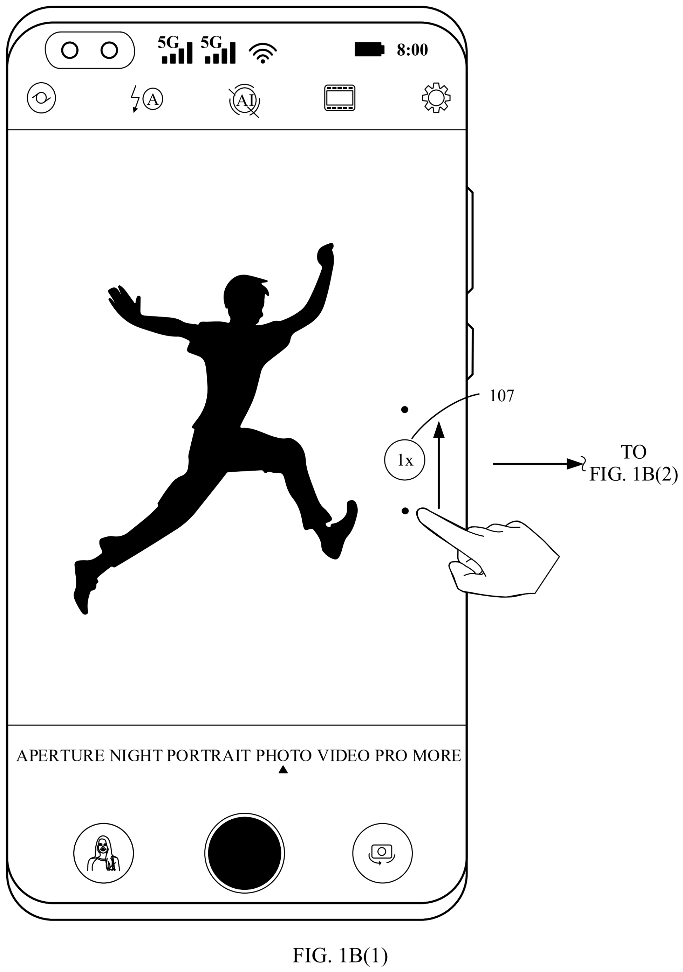

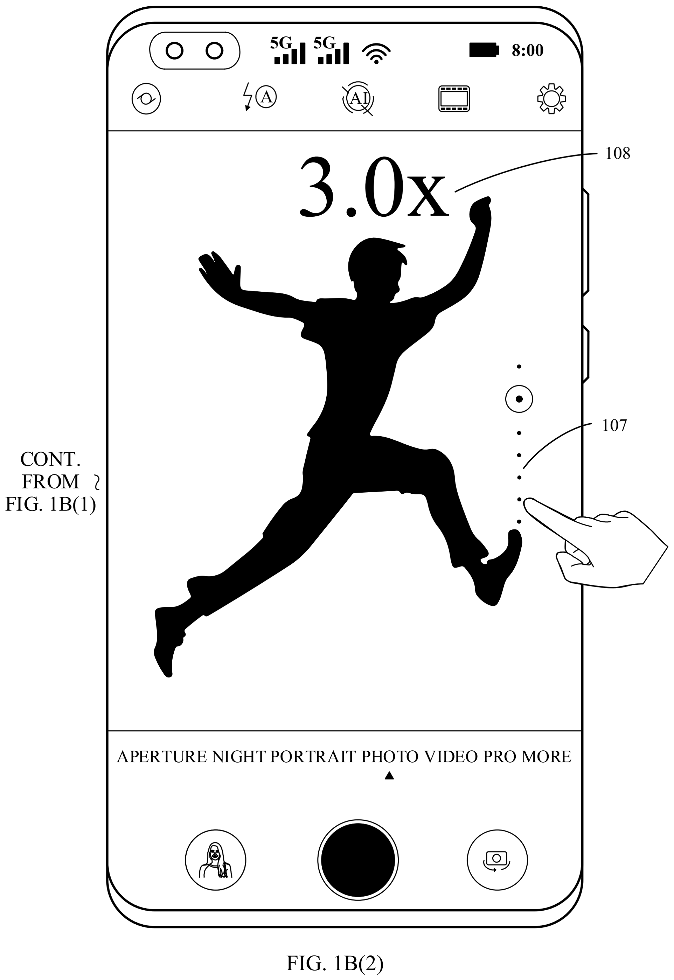

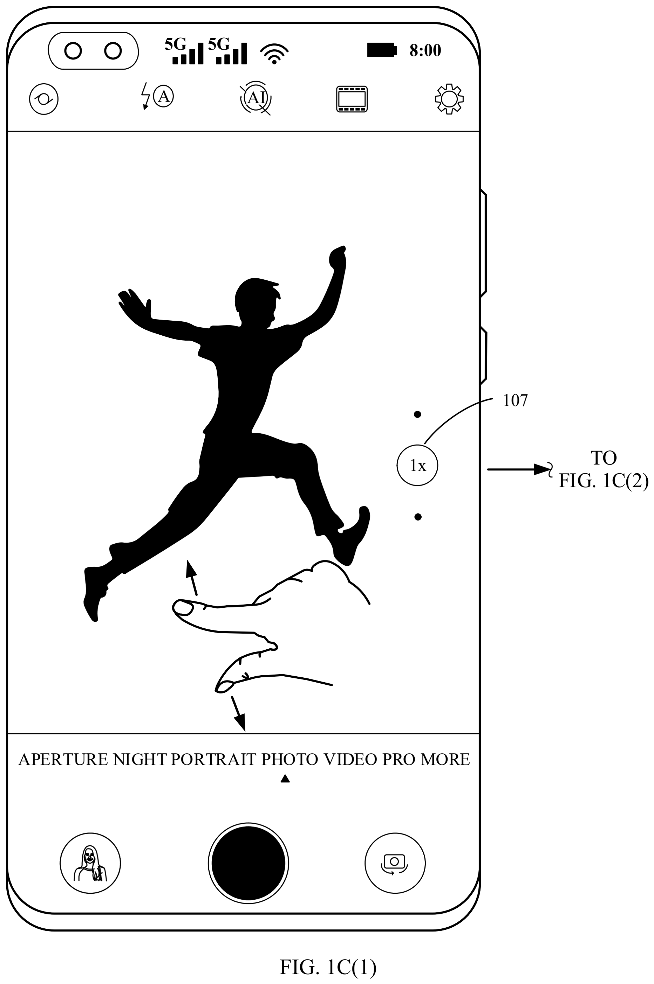

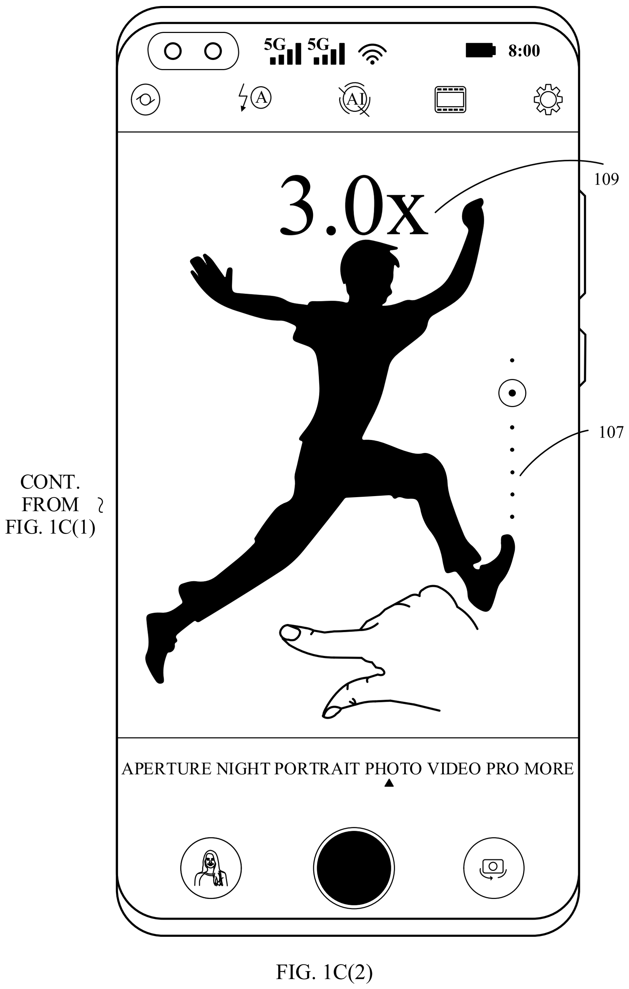

In another example, as shown in FIG. 1B(1), the user slides the zoom control 107, and in response to the sliding operation of the user on the zoom control 107, the mobile phone adjusts the current zoom ratio of the mobile phone, and the FOV of the shooting preview interface and a size of a shot scene change accordingly. When the user slides the zoom control 107 to adjust the current zoom ratio of the mobile phone, a display style of the zoom control 107 changes to indicate that the zoom ratio of the mobile phone is being adjusted. Reference may be made to FIG. 1B(2). Still to referring to FIG. 1B(2), in response to the sliding operation of the user, the current zoom ratio 108 of the mobile phone changes accordingly and is displayed in the preview interface, so that the user can clearly learn of the current zoom ratio of the mobile phone. When the current zoom ratio of the mobile phone is adjusted to 3.0x, if the user stops the sliding operation on the zoom control and removes the hand, the current zoom ratio of the mobile phone is set to 3.0x, the display style of the zoom control 107 is restored to indicate that the current zoom ratio is "3x", and adjustment of the zoom ratio of the mobile phone is completed. In this case, reference may be made to FIG. 1A(2). In the example shown in FIG. 1B(1) and FIG. 1B(2), that the user slides the zoom control 107 upward to increase the zoom ratio is used as an example. That the user slides the zoom control 107 downward to reduce the zoom ratio is also similar, and details are not described herein again. In still another example, as shown in FIG. 1C(1), the user slides the preview interface with two fingers facing away from each other, and in response to the sliding operation of the user with two fingers facing away from each other, the mobile phone increases the current zoom ratio of the mobile phone, and the FOV of the shooting preview interface becomes smaller, and a shot scene becomes larger. Similarly, if the user slides the preview interface with two fingers facing each other, in response to the sliding operation of the user with two fingers facing each other, the mobile phone reduces the current zoom ratio of the mobile phone, the FOV of the shooting preview interface becomes larger, and the shot scene becomes smaller. When the user slides (slides the preview interface with two fingers facing away from each other or slides the preview interface with two fingers facing each other) the preview interface with two fingers to adjust the current zoom ratio of the mobile phone, a display style of the zoom control 107 changes to indicate that the zoom ratio of the mobile phone is being adjusted. Reference may be made to FIG. 1C(2). Still to referring to FIG. 1C(2), in response to the two-finger sliding operation of the user, the current zoom ratio 109 of the mobile phone changes accordingly and is displayed in the preview interface, so that the user can clearly learn of the current zoom ratio of the mobile phone. When the current zoom ratio of the mobile phone is adjusted to 3.0x, if the user stops the two-finger sliding operation and removes the hand the current zoom ratio of the mobile phone is set to 3.0x, the display style of the zoom control 107 is restored to indicate that the current zoom ratio is "3x", and adjustment of the zoom ratio of the mobile phone is completed. In this case, reference may be made to FIG. 1A(2).

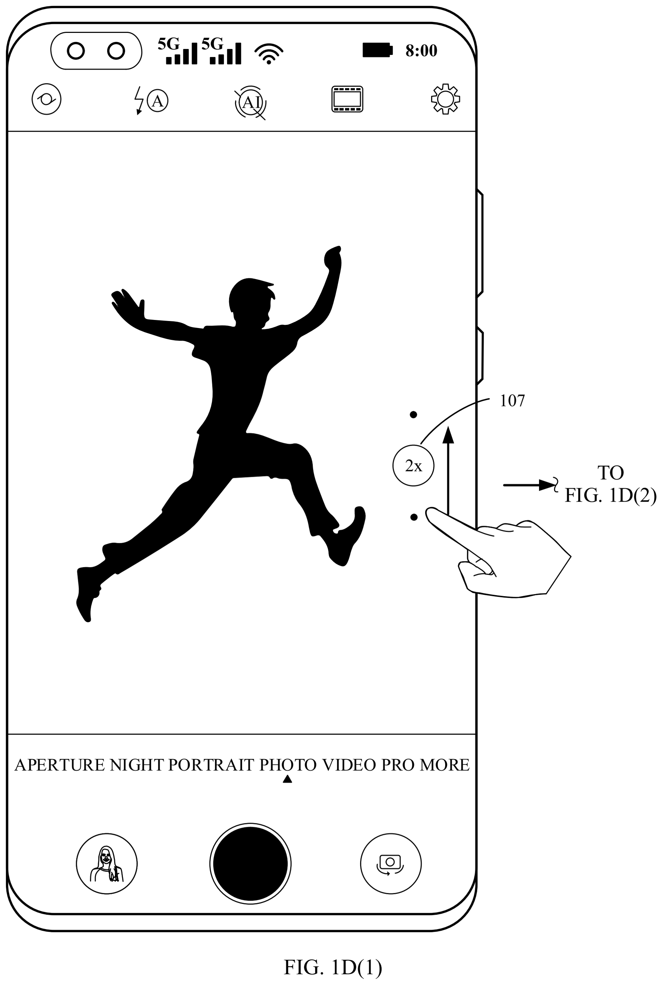

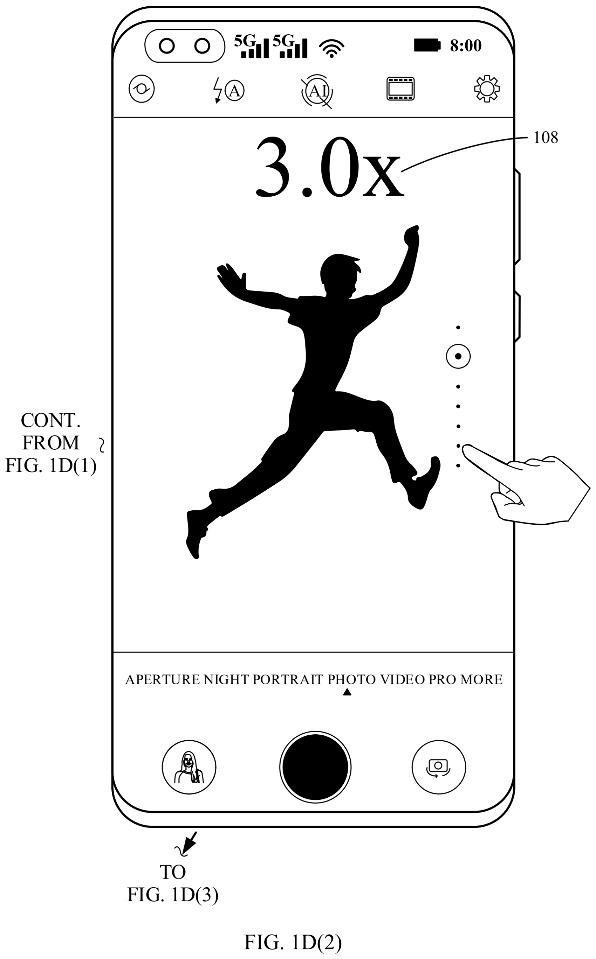

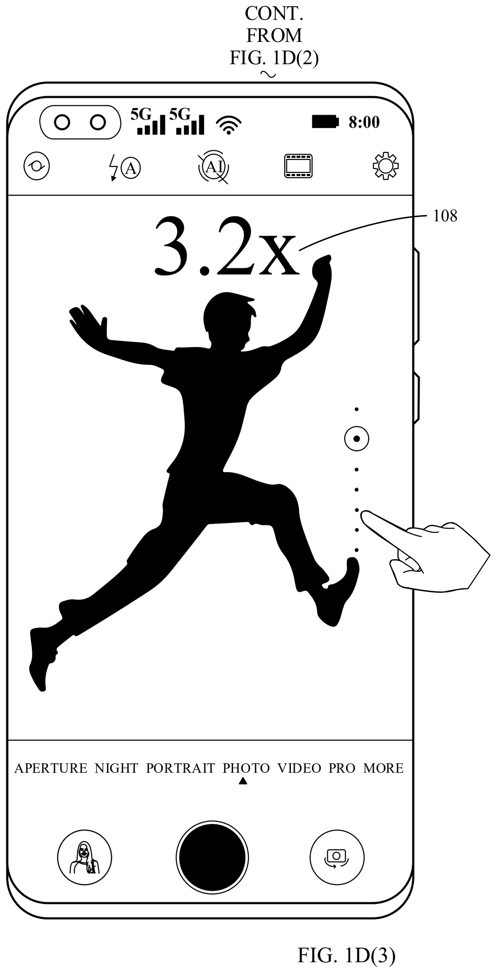

However, in zoom scenarios related to, for example, FIG. 1A(1) and FIG. 1A(2), FIG. 1B(1) and FIG. 1B(2), and FIG. 1C(1) and FIG. 1C(2), a response delay of a system of the mobile phone to a zoom operation (for example, tapping the zoom control, sliding the zoom control, and sliding the preview interface with two fingers) of the user is relatively high. Specifically, a time difference between the zoom operation (or referred to as a ratio adjustment operation), that is of the user and that adjusts the mobile phone to a specific zoom ratio, and display of a preview image corresponding to the zoom ratio on a screen of the mobile phone is relatively large. An example in which the user slides the zoom control 107 to adjust the current zoom ratio of the mobile phone is used. With reference to FIG. 1D(1) and FIG. 1D(2), when the user slides the zoom control to adjust the zoom ratio of the mobile phone to 3.0x, the current zoom ratio 108 of the mobile phone in the preview interface is displayed as "3.0x" accordingly. However, the FOV of the shooting preview interface is not adjusted synchronously. Instead, a preview image corresponding to the zoom ratio "3.0x" is only displayed on the screen of the mobile phone after a response delay. In the example shown in FIG. 1D(2), the current zoom ratio 108 displayed in the interface of the mobile phone is adjusted, but the FOV of the shooting preview interface is not adjusted correspondingly. In this case, the zoom ratio corresponding to the preview image of the mobile phone is inconsistent with the current zoom ratio 108 "3.0x" that is of the mobile phone and that is displayed in the interface of the mobile phone. Still to referring to FIG. 1D(3), when the preview image corresponding to the zoom ratio "3.0x" is displayed on the screen of the mobile phone, due to an operation of continuously sliding the zoom control by the user, the current zoom ratio 108 that is of the mobile phone and that is set by the user may become "3.2x". In this case, the zoom ratio "3.0x" corresponding to the preview image of the mobile phone is also inconsistent with the current zoom ratio 108 "3.2x" that is of the mobile phone and that is displayed in the interface of the mobile phone.

For the zoom operation of the user, an optimal response delay of the system of the mobile phone is 0 ms. That is, as the user performs the zoom operation, the FOV of the shooting preview interface and the current zoom ratio that is of the mobile phone and that is displayed in the interface of the mobile phone are adjusted synchronously. However, due to limitations of a hardware processing delay and a software architecture design of the terminal, the system of the mobile phone cannot reach the response delay of 0 ms for the zoom operation of the user. It may be understood that, for the zoom operation of the user, a lower response delay of the system of the mobile phone indicates better zoom use experience of the user. In a process in which the user adjusts, based on the zoom operation, the FOV of the shooting preview interface of the mobile phone, response delays of the first frame of preview image and the last frame of preview image are most important for user experience. A relatively high response delay of the first frame of preview image may be represented as follows: The zoom operation of the user starts, but the FOV of the preview interface of the mobile phone is not adjusted in real time with the zoom operation of the user. A relatively high response delay of the last frame of preview image may be represented as follows: The zoom operation of the user is stopped, but the FOV of the preview interface of the mobile phone still changes.

With popularization of touchscreen terminals, an operation such as tapping and sliding becomes a main manner of human-computer interaction. In a process in which the user taps the zoom control, slide the zoom control, slides the preview interface with two fingers, and the like, responsiveness in which the FOV of the shooting preview interface of the terminal changes with the operation of the user becomes an important indicator that affects user experience. Therefore, how to reduce the response delay of the terminal to the zoom operation of the user to improve user experience is an urgent problem that needs to be resolved.

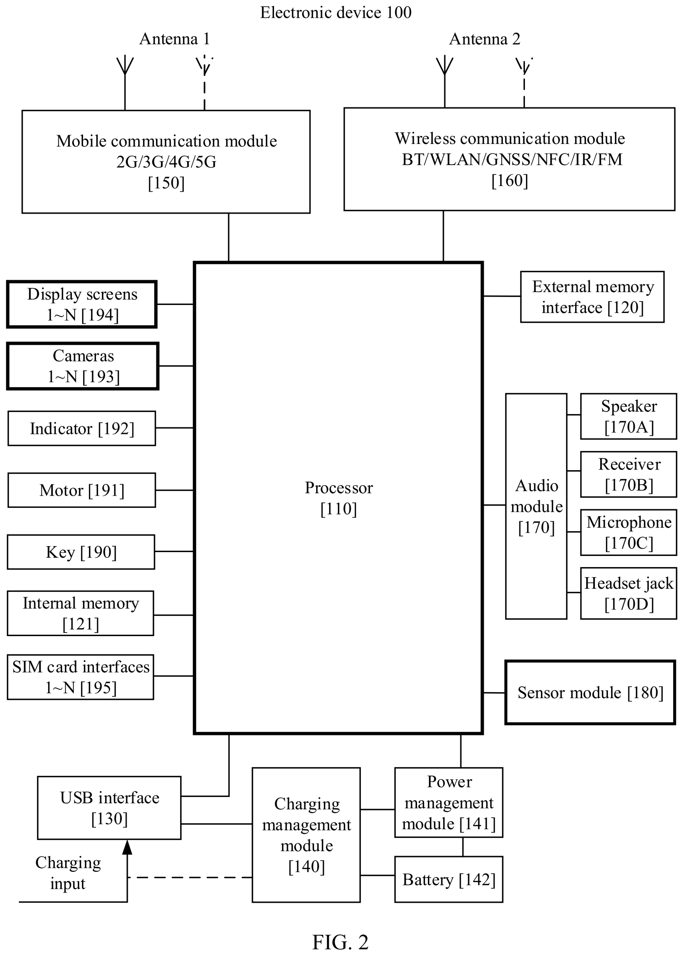

FIG. 2 is a schematic diagram of a structure of an electronic device 100. Optionally, the electronic device 100 may be a terminal, or may be referred to as a terminal device. The terminal may be a device with a camera such as a cellular phone (cellular phone) or a tablet computer (pad). This is not limited in this application. It should be noted that the schematic diagram of the structure of the electronic device 100 may be applied to the mobile phone in FIG. 1A(1)~FIG. 1D(3). It should be understood that the electronic device 100 shown in FIG. 2 is only an example of the electronic device, and the electronic device 100 may have more or fewer components than those shown in the figure, may combine two or more components, or may have different component configurations. The components shown in FIG. 2 may be implemented by hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, and a subscriber identity module (subscriber identification module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110 to store instructions and data. In some embodiments, the memory in the processor 110 is a cache.

The USB interface 130 is an interface that complies with USB standard specifications, and may be specifically a Mini USB interface, a Micro USB interface, a USB Type C interface, or the like. The USB interface 130 may be configured to be connected to a charger to charge the electronic device 100, may be configured to transmit data between the electronic device 100 and a peripheral device, or may be configured to be connected to a headset to play audio by using the headset. The interface may alternatively be configured to connect to another electronic device, for example, an AR device.

The charging management module 140 is configured to receive charging input from a charger. The charger may be a wireless charger, or may be a wired charger. In some embodiments of wired charging, the charging management module 140 may receive charging input from a wired charger by using the USB interface 130. In some embodiments of wireless charging, the charging management module 140 may receive wireless charging input by using a wireless charging coil of the electronic device 100. When charging the battery 142, the charging management module 140 may further supply power to the electronic device by using the power management module 141.

The power management module 141 is configured to be connected to the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication that includes 2G/3G/4G/5G and the like and that is applied to the electronic device 100. The mobile communication module 150 may include at least one filter, switch, power amplifier, low noise amplifier (low noise amplifier, LNA), and the like.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a shooting scenario. In some embodiments, the ISP may be disposed in the camera 193.

The camera 193 is configured to capture a still image or a video. An optical image is generated for a scene through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV.

In some embodiments, the electronic device 100 may include one or N cameras 193, where N is a positive integer greater than 1. The camera includes a photosensitive sensor, a lens, and a package body for fastening the photosensitive sensor and the lens. The camera is configured to obtain a shot image in a specific ratio range. A smaller focal length of the camera 193 indicates larger field of view thereof and a larger framing range, so that more scenes can be shot. On the contrary, a larger focal length of the camera 193 indicates smaller field of view thereof and a smaller framing range, so that fewer but more distant scenes can be shot. For example, N is 3. Three cameras are respectively a wide-angle camera, a primary camera, and a long-focus camera, ratio ranges of the three cameras are respectively 0.4-1.0, 1.0-3.5, and 3.5-30, and a value of the ratio range is merely an example for description. Performance of the cameras in terms of field of view is as follows: The wide-angle camera is superior to the primary camera, and the primary camera is superior to the long-focus camera.

The external memory interface 120 may be configured to connect to an external memory card, for example, a Micro SD card, to expand a storage capability of the electronic device 100. The external memory card communicates with the processor 110 by using the external memory interface 120, to implement a data storage function.

The internal memory 121 may be configured to store computer-executable program code, and the executable program code includes instructions. The processor 110 runs the instructions stored in the internal memory 121, to execute various function applications and data processing of the electronic device 100, for example, to enable the electronic device 100 to implement the zoom response method in the embodiments of this application. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function by using the audio module 170, the speaker 170A, the receiver 170B, the microphone 170C, the headset jack 170D, the application processor, and the like. For example, music playing and sound recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The pressure sensor is configured to sense a pressure signal, and may convert the pressure signal into an electrical signal. In some embodiments, the pressure sensor may be disposed on the display screen 194. The electronic device 100 may also calculate a touch location based on a signal detected by the pressure sensor.

The gyroscope sensor may be configured to determine a motion posture of the electronic device 100. In some embodiments, angular velocities of the electronic device 100 around three axes (namely, an x axis, a y axis, and a z axis) may be determined by using the gyroscope sensor.

The acceleration sensor may detect magnitudes of acceleration in various directions (usually on three axes) of the electronic device 100. The acceleration sensor may detect a magnitude and a direction of gravity when the electronic device 100 is still. The acceleration sensor may be further configured to identify a posture of the electronic device, and is applied to applications such as landscape/portrait mode switching and a pedometer.

The touch sensor is also referred to as a "touch panel". The touch sensor may be disposed on the display screen 194. The touch sensor and the display screen 194 form a touchscreen, which is also referred to as a "touch control screen". The touch sensor is configured to detect a touch operation performed on or near the touch sensor. The touch sensor may transmit the detected touch operation to the application processor to determine a type of a touch event.

The key 190 includes an on/off key (or referred to as a power key), a volume key, or the like. The key 190 may be a mechanical key, or may be a touch key. The electronic device 100 may receive key input and generate a key signal input related to user settings and function control of the electronic device 100.

The motor 191 may generate a vibration prompt. The motor 191 may be configured to provide a vibration prompt for an incoming call, and may also be configured to provide vibration feedback for touch. For example, touch operations performed on different applications (for example, photographing and audio playing) may correspond to different vibration feedback effects.

The indicator 192 may be an indicator light, may be configured to indicate a charging status or a power change, and may be further configured to indicate a message, a missed call, a notification, and the like.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

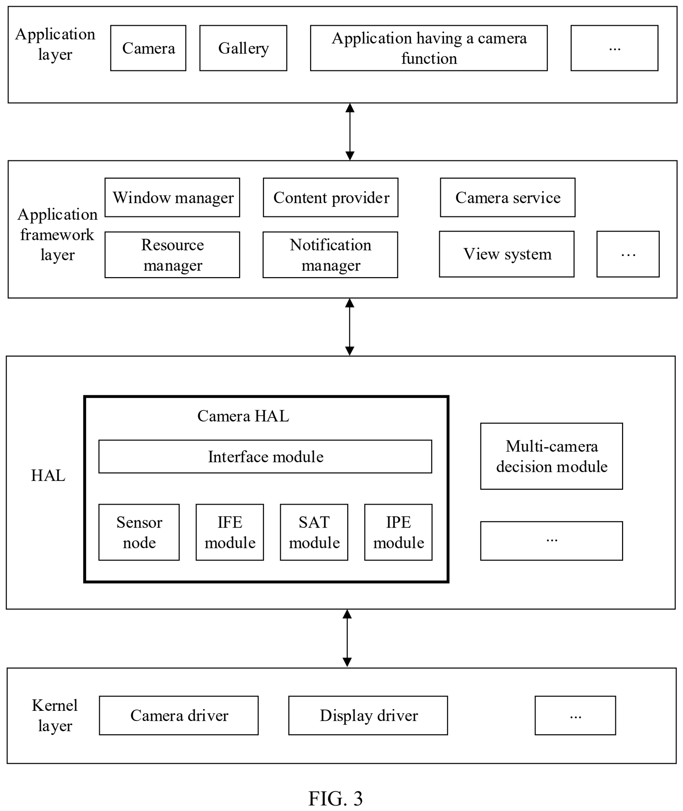

FIG. 3 is a block diagram of a software structure of the electronic device 100 according to an embodiment of this application.

In the layered architecture of the electronic device 100, software is divided into several layers, and each layer has a clear role and task. The layers communicate with each other by using a software interface. In some embodiments, the Android system is divided into four layers from top to bottom: an application layer, an application framework layer, a hardware abstraction layer (hardware abstraction layer, HAL), and a kernel (Kernel) layer (which is also referred to as a driver layer).

It may be understood that FIG. 3 is only an example. For example, an Android runtime (Android runtime) and a system library (libraries) layer may be further included between the application framework layer and the HAL layer. The Android Runtime includes a core library and a virtual machine, and is responsible for scheduling and management of the Android system. The system library may include a plurality of functional modules, for example, a surface manager (surface manager), a media library (Media Libraries), a three-dimensional graphics processing library (for example, OpenGL ES), and a 2D graphics engine (for example, SGL).

The application layer may include a series of application packages. As shown in FIG. 3, the application packages may include applications such as a camera application, a gallery, and an application having a camera function. The application packages may further include applications such as Phone, Calendar, Map, Navigation, Music, Video, and Messages.

The application framework layer provides an application programming interface (application programming interface, API) and a programming framework for an application at the application layer. The application framework layer includes some predefined functions.

As shown in FIG. 3, the application framework layer may include a camera service, and the camera service may be invoked by the camera application, to implement a shooting-related function. In addition, the application framework layer may further include a window manager, a content provider, a view system, a phone manager, a resource manager, a notification manager, and the like.

The window manager is used to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls, for example, a control for displaying text and a control for displaying a picture. The view system may be configured to build an application. A display interface may include one or more views. For example, a display interface including an SMS message notification icon may include a view for displaying a text and a view for displaying a picture.

The phone manager is configured to provide the electronic device 100 with a communication function, for example, call status management (including answering, hanging up, or the like). The resource manager provides various resources for the application, for example, a localized string, an icon, a picture, a layout file, and a video file.

The notification manager enables an application to display notification information in a status bar, and may be configured to convey a notification message that may automatically disappear after a short stay without requiring user interaction. For example, the notification information is configured to notify download completion, provide a message reminder, and the like. The notification information may be further a notification that appears in the status bar at the top of the system in a form of a graph or scroll bar text, for example, a notification of an application running in the background, or a notification that appears on a screen in a form of a dialog window. For example, the notification information may further be text information prompted in the status bar, a produced alert tone, vibration of the electronic device, or blinking of an indicator light.

It should be noted that the camera application may also invoke the content provider, the resource manager, the notification manager, the window manager, the view system, and the like based on an actual service requirement. This is not limited in this embodiment of this application.

The kernel layer is a layer between hardware and software. The kernel layer includes at least a camera driver. The camera driver may be used to drive a hardware module having a shooting function, such as a camera sensor (Camera sensor). In other words, the foregoing camera driver needs to be responsible for data exchange with the camera sensor. Certainly, the kernel layer may further include a display driver, an audio driver, a sensor driver, and the like. This is not limited in this embodiment of this application.

In addition, the HAL layer may encapsulate a drive program at the kernel layer, and provide the application framework layer with an interface for invoking, to shield implementation details of low-level hardware. As shown in FIG. 3, the foregoing HAL layer may include Camera HAL, a multi-camera decision module, and the like.

The Camera HAL is a Camera core software framework, and the Camera HAL includes an interface module, a sensor node (Sensor node), an image processing module, and the like. In an implementation, the image processing module may include an image signal processing front end (Image Signal Processing Front End, IFE) module, a spatial alignment transform (Spatial Alignment Transform, SAT) module, and an image signal processing post end (Image Signal Processing Post End, IPE) module. Related processing related to the Sensor node and the IFE module belongs to processing of a realtime pipeline (Realtime Pipeline), and related processing related to the SAT module and the IPE module belongs to processing of an offline pipeline (Offline Pipeline).

The Sensor node, the image processing module, and the interface module are components in an image data and control instruction transmission pipeline in the Camera HAL. Certainly, different components correspondingly have different functions. For example, the Sensor node may be a control node oriented to the camera sensor, and the Sensor node may control the camera sensor by using the camera driver. For another example, the interface module may be a software interface oriented to the application framework layer, and is configured to exchange data with the application framework layer. Certainly, the interface module may alternatively exchange data with another module (such as the multi-camera decision module, the image processing module, and the Sensor node) in the HAL. For another example, the image processing module may process raw image data returned by the camera sensor. The IFE module is configured to process a preview image frame collected by the camera sensor to perform preliminary cropping processing, to reserve an image margin (margin). The SAT module is configured to: perform spatial alignment on image data based on a zoom ratio and an SAT algorithm, to determine cropping data and warping (warp) data, so that the preview image is smoother, and a sense of inconsistency is reduced. The IPE module is configured to perform cropping and warping processing on preview image frame data based on a calculation result of the SAT module.

The multi-camera decision module may determine, based on an application scenario, a camera sensor for image output, for example, a camera sensor of a front-facing camera or a camera sensor of a rear-facing camera, or for another example, a camera sensor of a primary camera, a camera sensor of a wide-angle camera, and a camera sensor of a long-focus camera in a rear-facing camera. The camera application may transfer, to the camera service at the application framework layer, information such as a camera mode selected by a user and a zoom parameter, and then the camera service transfers the information to the multi-camera decision module by using the interface module of the HAL layer.

In this embodiment of this application, the multi-camera decision module may further estimate a to-be-switched target camera based on a zoom operation of the user, and enables a camera sensor of the target camera in advance by using the camera driver. In addition, the multi-camera decision module may further set a camera, that is currently used for image output, among a plurality of cameras whose camera sensors are enabled.

In this way, the multi-camera decision module may determine, based on the camera mode, the zoom parameter, and the like, a camera that is actually used for image output, and enable the camera, or may estimate and enable a to-be-switched camera in advance in a zoom scenario.

It may be understood that the layers in the software structure shown in FIG. 3 and the components included in the layers do not constitute a specific limitation to the electronic device 100. In some other embodiments of this application, the electronic device 100 may include more or fewer layers than those shown in the figure, and each layer may include more or fewer components. This is not limited in this application.

In addition, it may be understood that, to implement the zoom response method in the embodiments of this application, the electronic device includes corresponding hardware and/or software modules for performing various functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint condition of the technical solutions. A person skilled in the art may use different methods to implement the described functions with reference to embodiments for each particular application, but it should not be considered that the implementation goes beyond the scope of this application.

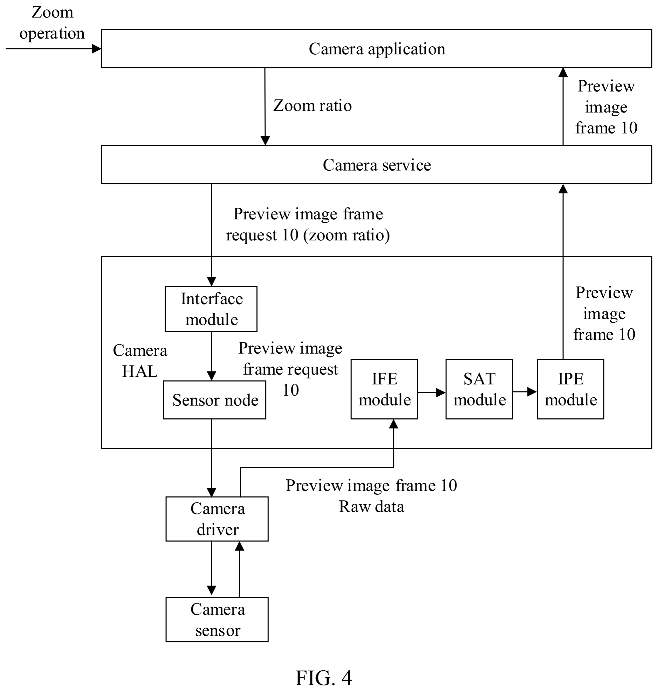

In an implementation, the preview image frame may be displayed based on the Android architecture provided by google and software of the Camera HAL layer of the Qualcomm platform. FIG. 4 shows an example of a module interaction procedure related to a zoom operation response method. In a preview scenario of the camera application, referring to FIG. 4, when a user performs a zoom operation, in response to the zoom operation of the user, a touch module of the mobile phone generates a touch report operation, and sends the touch report operation to the camera application. After receiving the touch report event, the camera application converts, into a zoom ratio (ZoomRatio) value, reported coordinate data corresponding to the touch report event, and sends the zoom ratio value to the camera service at the application framework layer. The camera service writes the zoom ratio value into a preview image frame request, and delivers the request to the camera HAL at the HAL layer. In the preview scenario of the camera application, the camera service continuously sends preview image frame requests to the camera HAL. In the following, the camera service writes the zoom ratio value into the 10th preview image frame request (referred to as a preview image frame request 10 for short), and delivers the request to the camera HAL. In the camera HAL, each preview image frame request needs to undergo processing of the Realtime Pipeline and the Offline Pipeline. Processing of the Realtime Pipeline includes processing of the Sensor node and the IFE module, and processing of the Offline Pipeline includes processing of the SAT module and the IPE module. As shown in FIG. 4, the preview image frame request 10 is sent to the Sensor node. Based on the preview image frame request 10, the Sensor node controls, by using the camera driver, the camera sensor to perform an exposure and image output operation.

After completing the exposure and image output operation, the camera sensor sends, to the IFE module by using the camera driver, raw image data corresponding to the preview image frame request 10. The IFE module performs preliminary cropping processing on the raw image data corresponding to the preview image frame request 10, and sends processed image data to the SAT module. The IFE module may perform, based on a zoom ratio value corresponding to the preview image frame request 10, preliminary cropping processing on the raw image data corresponding to the preview image frame request 10, to reserve an image margin region, so that the SAT module performs spatial alignment processing on an image. The SAT module performs image spatial alignment processing based on the zoom ratio value corresponding to the preview image frame request 10 and the related SAT algorithm, calculates cropping data and warping data that correspond to the image data, and sends, to the IPE module, a calculation result and image data corresponding to the preview image frame request 10. The IPE module performs, based on the calculation result of the SAT, a cropping operation and an image warping operation again on the image data corresponding to the preview image frame request 10, to obtain a preview image frame (referred to as a preview image frame 10 for short) corresponding to the preview image frame request 10. Further, the preview image frame 10 may be processed by the application framework layer such as the camera service and fed back to the camera application for UI display.

It may be learned that when the user performs a zoom operation, a processing link of a preview image frame request that is delivered by the camera service and that carries a related zoom ratio value is relatively long in the camera HAL. This causes a high response of the zoom operation. In addition, the camera system in the Android architecture has a circular buffer (buffer) mechanism between the application framework (Framework) layer and the HAL layer. Therefore, after the user enables the camera application, the camera service first continuously delivers a plurality of (for example, eight) preview image frame requests to the camera HAL, and then sends one preview image frame request to the camera HAL after one preview image frame fed back by the camera HAL is received each time. In the camera HAL, the Sensor node sequentially controls, based on the plurality of preview image frame requests and by using the camera driver, the camera sensor to perform an exposure and image output operation. In other words, for any preview image frame request, only after all preview image frame requests prior to the preview image frame request are processed by the Sensor node to complete exposure and image output, the Sensor node controls, for the preview image frame request, the camera sensor to perform an exposure and image output operation.

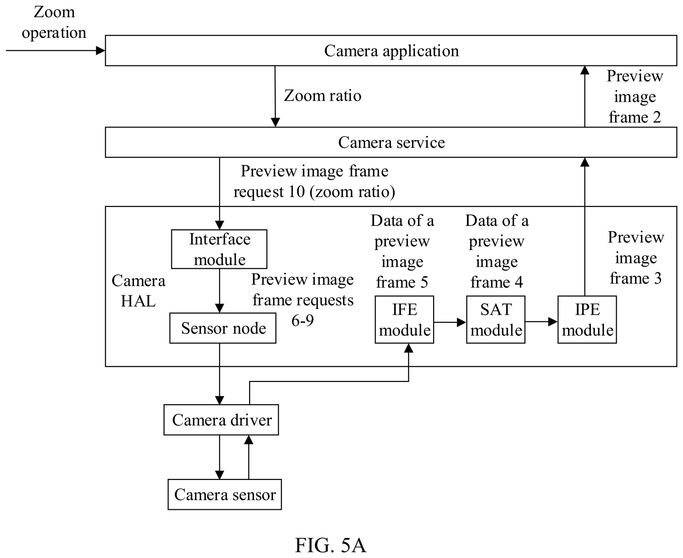

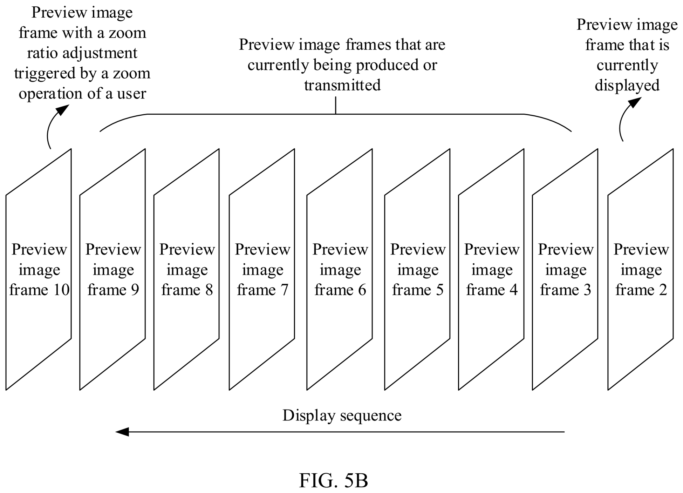

The following still uses an example in which the camera service writes, into the preview image frame request 10, the zoom ratio value that is set based on the zoom operation of the user. The preview image frame request 10 is delivered to the camera HAL by the camera service. As shown in FIG. 5A, after receiving the preview image frame request 10, the interface module in the camera HAL sends the preview image frame request 10 to the Sensor node for processing. It is assumed that the Sensor node is processing a preview image frame request 6 to expose a preview image frame 6 (in this embodiment of this application, an image frame obtained by processing a preview image frame request n is referred to as a preview image frame n). In this case, the preview image frame request 10 needs to sequentially wait for the Sensor node to process the preview image frame requests 6, 7, 8, and 9 before being processed by the Sensor node to expose the preview image frame 10. A frame rate of 30 fps is used as an example. If duration of exposing one image frame by the camera sensor is 30 ms, duration in which the Sensor node processes the preview image frame requests 6-9 to expose preview image frames 6-9 is 4*30=120 ms, that is, the preview image frame request 10 needs to wait for 120 ms before being processed by the Sensor node. In the scenario shown in FIG. 5A, when the interface module in the camera HAL receives the preview image frame request 10, the Sensor node is sequentially controlling exposure of the preview image frames 6-9, the IFE module is processing a preview image frame 5, the SAT module is performing calculation about cropping a preview image frame 4, the IPE module is completing cropping and warping of a preview image frame 3, and a preview image frame 2 is transmitted to the application framework layer to perform UI display through SurfaceFlinger composition. Still referring to FIG. 5B, in the camera HAL, because preview image frame requests 2-10 are sequentially processed, preview image frames 2-10 are also sequentially exposed, produced, and displayed. When the user performs a zoom operation to trigger generation of the preview image frame request 10 with a changed zoom ratio, the mobile phone displays the preview image frame 2, and the preview image frame 10 corresponding to the preview image frame request 10 may be displayed only after the preview image frames 2-9. Processing links of the preview image frames are the same. Reference may be made to FIG. 4. Due to the foregoing queuing exposure mechanism, link processing time of each preview image frame request in the camera HAL is relatively long. Further, when the user adjusts the zoom ratio by using the zoom operation, a processing delay of a preview image frame request corresponding to a target zoom ratio is relatively long, causing, for example, the problem shown in FIG. 1D(1) to FIG. 1D(3). Consequently, zoom responsiveness experience of the user is poor.

To resolve the foregoing problem, an embodiment of this application provides a zoom response method. In this method, when a user adjusts a zoom ratio by using a zoom operation, a terminal system shortens an effectiveness link of the zoom ratio, thereby greatly reducing a response delay to the zoom ratio, increasing a response speed of the terminal system to the zoom operation of the user, and improving use experience of the user.

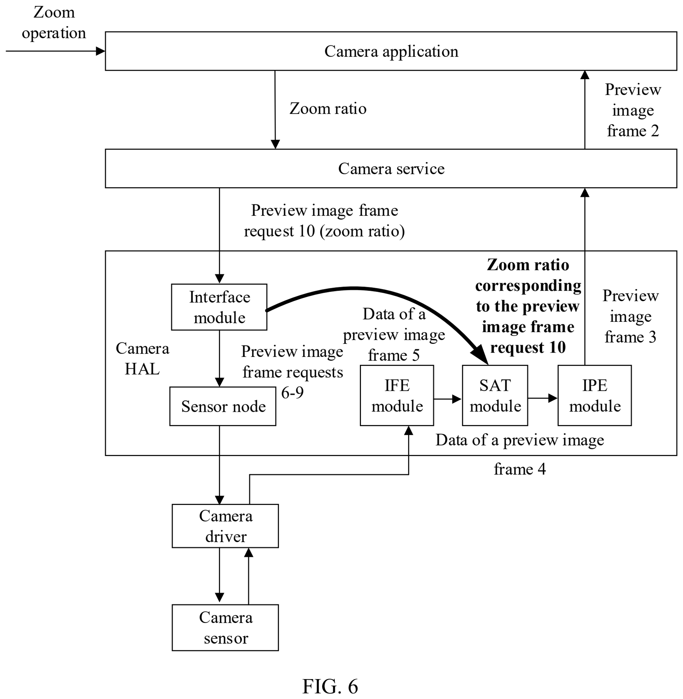

The following still uses an example in which the camera service writes, into the preview image frame request 10, the zoom ratio value that is set based on the zoom operation of the user. The preview image frame request 10 is delivered to the camera HAL by the camera service. In this embodiment of this application, as shown in FIG. 6, in the camera HAL, after receiving the preview image frame request 10, the interface module directly forwards, to the Offline Pipeline, the zoom ratio value carried in the preview image frame request 10, so that a related module in the Offline Pipeline can perform processing based on a newest zoom ratio carried in the preview image frame request 10. In this way, because the zoom ratio value is directly forwarded to the Offline Pipeline, an effectiveness link of the zoom ratio value skips processing of the Sensor node and the IFE module, so that a zoom response delay can be greatly reduced.

Still referring to FIG. 6, when the interface module in the camera HAL receives the preview image frame request 10, it is assumed that the Sensor node is sequentially controlling exposure of preview image frames 6-9, the IFE module is processing a preview image frame 5, the SAT module is performing calculation about cropping a preview image frame 4, the IPE module is completing cropping and warping of a preview image frame 3, and a preview image frame 2 is transmitted to the application framework layer to perform UI display through SurfaceFlinger composition. After receiving the preview image frame request 10, the interface module in the camera HAL forwards, to the SAT module, the zoom ratio value carried in the preview image frame request 10, so that the SAT module performs image spatial alignment processing on previously exposed preview image frame data (image data of the preview image frame 4 shown in FIG. 6) based on a zoom ratio value corresponding to the preview image frame request 10 and the related SAT algorithm, calculates cropping data and warping data that correspond to the image data of the preview image frame 4, and sends a calculation result and the image data of the preview image frame 4 to the IPE module, to complete an actual cropping operation and an actual warping operation by using the IPE module. Therefore, the zoom ratio value corresponding to the preview image frame request 10, namely, a zoom ratio value corresponding to the preview image frame 10, takes effect on the preview image frame 4 in advance. Calculation is performed by using an example in which exposure time of each frame of image is 30 milliseconds. In this scenario, the zoom response delay can be reduced by (10-4)*30=180 milliseconds.

It should be noted that only in a process in which the user performs the zoom operation to adjust the zoom ratio value (for example, the scenarios shown in FIG. 1B(2) and FIG. 1C(2)), a preview image frame request sent by the camera service to the camera HAL carries a zoom ratio value. Otherwise, the preview image frame request sent by the camera service to the camera HAL carries no zoom ratio value. After the camera HAL receives the preview image frame request delivered by the camera service, if the preview image frame request carries no zoom ratio value, the camera HAL may determine, based on a default zoom ratio value or a zoom ratio value corresponding to a previous preview image frame request, a zoom ratio value corresponding to the preview image frame request. For example, if the default zoom ratio value of the camera application is 1.0, after the camera application is started, the camera HAL uses the default zoom ratio 1.0 as a zoom ratio value corresponding to the received 1st preview image frame request. For another example, if the preview image frame request 9 received by the camera HAL carries no zoom ratio value, a zoom ratio value corresponding to the preview image frame request 8 is used as a zoom ratio value corresponding to the preview image frame request 9.

In the application scenario shown in FIG. 6, the preview image frame requests 4-9 carry no zoom ratio value, and zoom ratio values corresponding to the preview image frame requests 4-9 are all determined by the camera HAL based on zoom ratio values of corresponding previous preview image frame requests (namely, the preview image frame requests 3-8). In this embodiment of this application, to reduce the response delay of the zoom ratio, the SAT module performs image spatial alignment processing on the image data of the preview image frame 4 based on the zoom ratio value carried in the preview image frame request 10, instead of a zoom ratio value that corresponds to the preview image frame request 4 and that is set by the camera HAL.

Similarly, if a preview image frame request 11 received by the camera HAL also carries a zoom ratio value (such as a zoom ratio 1), to reduce the response delay of the zoom ratio, it is assumed that the SAT module is performing image spatial alignment processing on image data of the preview image frame 5. In this case, the SAT module performs image spatial alignment processing on the image data of the preview image frame 5 based on the zoom ratio 1 carried in the preview image frame request 11, and by analogy.

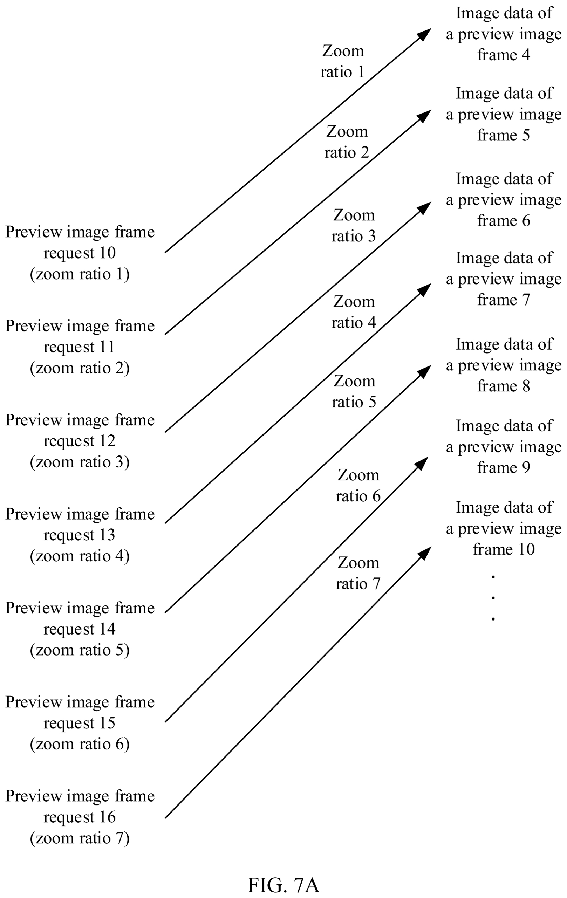

In a case, as shown in FIG. 7A, the SAT module performs image spatial alignment processing on image data of the preview image frame 5 based on a zoom ratio 1 carried in the preview image frame request 10, performs image spatial alignment processing on image data of the preview image frame 6 based on a zoom ratio 2 carried in the preview image frame request 11, performs image spatial alignment processing on image data of the preview image frame 7 based on a zoom ratio 3 carried in a preview image frame request 13, and the like. In other words, the zoom ratio 1 carried in the preview image frame request 10 takes effect on the preview image frame 4 in advance, the zoom ratio 2 carried in the preview image frame request 11 takes effect on the preview image frame 5 in advance, the zoom ratio 3 carried in the preview image frame request 12 takes effect on the preview image frame 6 in advance, and the like. In a scenario in which the user continuously performs the zoom operation, a preview frame request 16 delivered by the camera service still carries a zoom ratio value (such as a zoom ratio 7). Based on a sequence, the camera HAL may enable the zoom ratio 7 carried in the preview image frame request 16 to take effect on the preview image frame 10 in advance. Therefore, when the user does not stop the zoom operation, a zoom ratio value that is set due to the zoom operation of the user takes effect on a previously exposed preview image frame in advance.

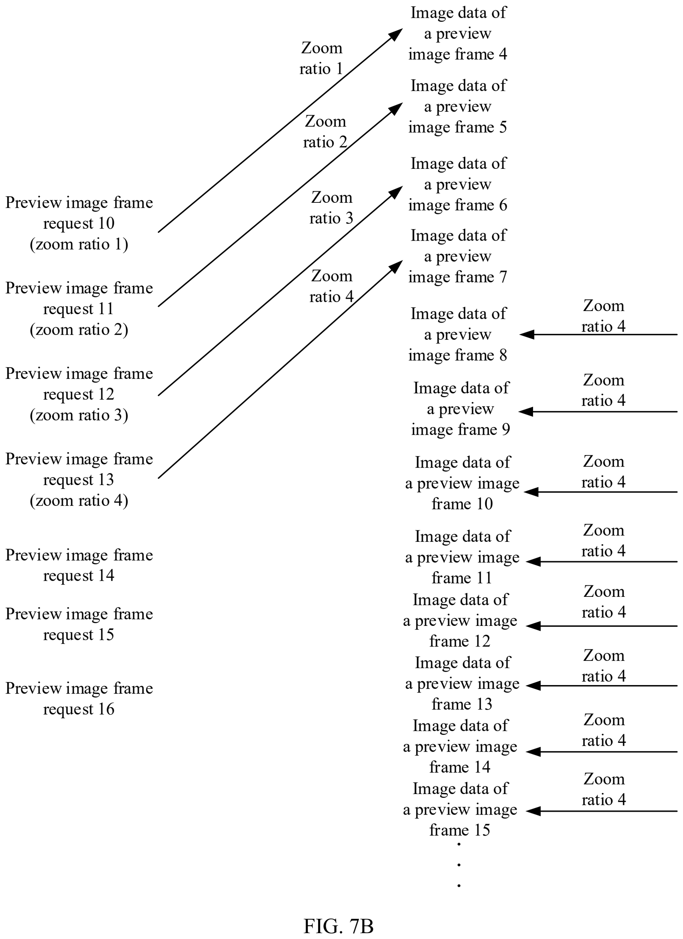

In another case, as shown in FIG. 7B, a zoom ratio 1 carried in the preview image frame request 10 takes effect on the preview image frame 4 in advance, a zoom ratio 2 carried in the preview image frame request 11 takes effect on the preview image frame 5 in advance, a zoom ratio 3 carried in a preview image frame request 12 takes effect on the preview image frame 6 in advance, and a zoom ratio 4 carried in a preview image frame request 13 takes effect on the preview image frame 7 in advance. If the user stops the zoom operation at this point, a preview image frame request subsequently delivered to the camera HAL by the camera service carries no zoom ratio value. For example, preview image frame requests 14, 15, 16, and the like carry no zoom ratio value. After the user stops the zoom operation, the camera HAL may determine, based on a zoom ratio value (namely, a zoom ratio value that currently takes effect most recently) that is set by the user, a zoom ratio value corresponding to each subsequent preview image frame request (which carries no zoom ratio value). In the example shown in FIG. 7B, the zoom ratio value that is set by the user is the zoom ratio 4. Therefore, the SAT module may enable the zoom ratio 4 that is set by the user to take effect on a subsequently processed preview image frame, for example, preview image frames 8, 9, 10, 11, 12, 13, 14, and 15.

It should be noted that, referring to FIG. 7B, the preview image frame request 8 that carries no zoom ratio value is used as an example, and a zoom ratio value that takes effect on the preview image frame 8 corresponding to the preview image frame request 8 is the zoom ratio 4 (namely, a zoom ratio value that takes effect on the preview image frame 7) that currently takes effect most recently. The preview image frame request 9 that carries no zoom ratio value is used as an example, and a zoom ratio value that takes effect on the preview image 9 corresponding to the preview image frame request 9 is also the zoom ratio 4 (namely, a zoom ratio value that takes effect on the preview image frame 8) that currently takes effect most recently. Processing of the preview image frame requests 14-16 that carry no zoom ratio value are also similar, and details are not described again. The preview image frame request 10 that carries the zoom ratio 1 is still used as an example. The zoom ratio 1 takes effect on the preview image frame 4 in advance. A zoom ratio value that takes effect on the preview image 10 corresponding to the preview image frame request 10 is the zoom ratio 4 (namely, a zoom ratio value that takes effect on the preview image frame 10) that currently takes effect most recently. Processing of the preview image frame requests 11-13 that carries the zoom ratio value are also similar, details are not described again. In this way, when a zoom ratio value that needs to preferentially take effect does not exist, the camera HAL always applies, to a next frame of image, a zoom ratio value that currently takes effect most recently, to prevent field of view of a preview interface from jumping, and avoid bringing poor visual experience to the user.

In a scenario, it cannot be ensured that a speed at which the camera HAL receives a preview image frame request and a speed at which the Offline Pipeline processes a preview image frame request are synchronized frame by frame. For example, if the speed at which the camera HAL receives the preview image frame request is higher than the speed at which the Offline Pipeline processes the preview image frame request, zoom ratio values carried in some preview image frame requests may be skipped and cannot take effect. Otherwise, a zoom ratio value carried in a same preview image frame request may take effect on more than two preview image frames.

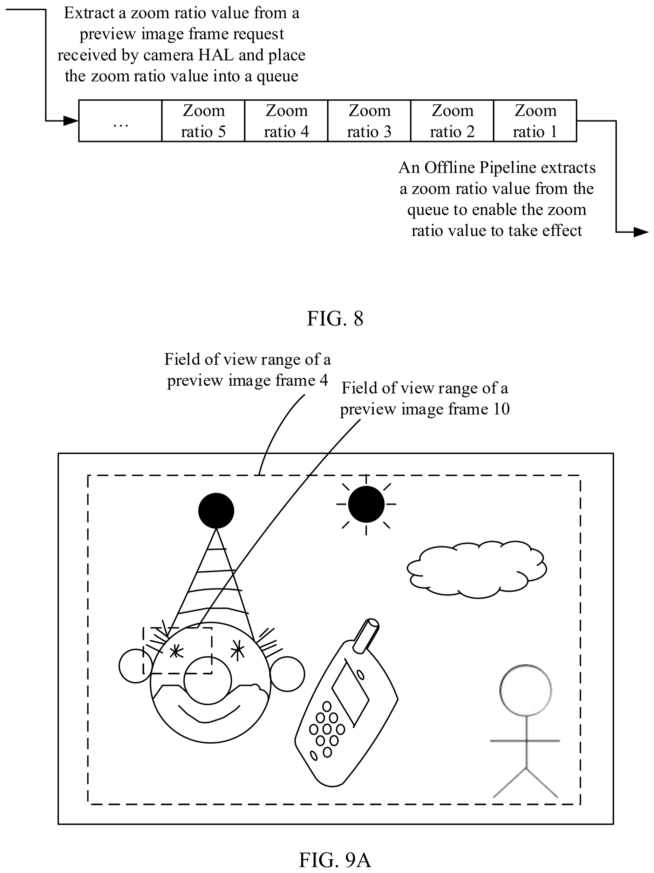

To resolve the problem that the speed at which the camera HAL receives the preview image frame request and the speed at which the Offline Pipeline processes the preview image frame request cannot be synchronized frame by frame, the camera HAL maintains a zoom ratio queue globally. The zoom ratio queue is a first-in first-out queue, and is used to store a zoom ratio value carried in a received preview image frame request. As shown in FIG. 8, after receiving a preview image frame request, if learning, through parsing, that the preview image frame request carries a zoom ratio value, the camera HAL (for example, the interface module) writes the zoom ratio value into the zoom ratio queue. When a zoom ratio value exists in the zoom ratio queue, the Offline Pipeline sequentially extracts a zoom ratio value from the zoom ratio queue to enable the zoom ratio value to take effect.

For example, in the example shown in FIG. 7A, the zoom ratio 1 to the zoom ratio 7 respectively carried in the preview image frame request 10-the preview image frame request 16 are sequentially written into the zoom ratio queue. When processing the image data of the preview image frame 4, if reading that the zoom ratio 1 exists in the zoom ratio queue, the Offline Pipeline extracts the zoom ratio 1 from the zoom queue, and processes the image data of the preview image frame 4 based on the zoom ratio 1. Similarly, when processing the image data of the preview image frame 5, if reading that the zoom ratio 2 exists in the zoom ratio queue, the Offline Pipeline extracts the zoom ratio 2 from the zoom queue, and processes the image data of the preview image frame 5 based on the zoom ratio 2, and by analogy.

For example, in the example shown in FIG. 7B, the zoom ratio 1 to the zoom ratio 4 respectively carried in the preview image frame request 10-the preview image frame request 13 are sequentially written into the zoom ratio queue. When processing the image data of the preview image frame 4, if reading that the zoom ratio 1 exists in the zoom ratio queue, the Offline Pipeline extracts the zoom ratio 1 from the zoom queue, and processes the image data of the preview image frame 4 based on the zoom ratio 1. By analogy, when processing the image data of the preview image frame 7, if reading that the zoom ratio 4 exists in the zoom ratio queue, the Offline Pipeline extracts the zoom ratio 4 from the zoom queue, and processes the image data of the preview image frame 7 based on the zoom ratio 4. Then, when processing image data of the preview image frame 8, the Offline Pipeline reads that no zoom ratio value exists in the zoom ratio queue, and a zoom ratio value (namely, a zoom ratio value that currently takes effect most recently) that is currently set by the user is the zoom ratio 4. The zoom ratio value that currently takes effect most recently is a zoom ratio value that takes effect on a previous frame of preview image data. For example, when the Offline Pipeline processes the image data of the preview image frame 8, the zoom ratio value that currently takes effect most recently is a zoom ratio value that takes effect on the preview image frame 7. Therefore, the Offline Pipeline processes the image data of the preview image frame 8 based on the zoom ratio 4. When processing image data of the preview image frames 8-15, if the Offline Pipeline reads that no zoom ratio value exists in the zoom ratio queue, and the zoom ratio value that currently takes effect most recently is the zoom ratio 4, the Offline Pipeline continues to perform image data processing based on the zoom ratio 4.

In a possible implementation, the camera HAL further includes a Zooming state detection module, configured to detect whether the electronic device is currently in a zoom scenario. If the camera HAL receives a preview image frame request that carries a zoom ratio value, it may determine that the electronic device is currently in the zoom scenario.

For example, if none of a plurality of preview image frame requests consecutively received by the camera HAL carries no zoom ratio value, the Zooming state detection module may determine that the electronic device is not currently in the zoom scenario. Otherwise, the Zooming state detection module determines that the electronic device does not exit the zoom scenario.

In this implementation, when the Zooming state detection module determines that the electronic device is currently in the zoom scenario, if a preview image frame request received by the camera HAL carries no zoom ratio value, the camera HAL uses, as a zoom ratio value corresponding to the preview image frame request, a zoom ratio value corresponding to a previous preview image frame request, and writes the zoom ratio value into the zoom ratio queue. In this way, a plurality of zoom ratio values continuously take effect, to prevent field of view of a preview interface from jumping, and avoid bringing poor visual experience to the user.

When the Zooming state detection module determines that the electronic device exits the zoom scenario, the Zooming state detection module may indicate to clear the zoom ratio queue. In this way, when the user performs a zoom operation again to enable the electronic device to enter a zooming state, the camera HAL may write, into the zoom ratio queue again, a zoom ratio value carried in a preview image frame request, thereby reducing an effectiveness link of the zoom ratio value, and reducing a response delay of the zoom operation.

The zoom scenario related when the user performs the zoom operation may be roughly divided into a Zoom In scenario and a Zoom Out scenario. The Zoom In scenario is adjusting a focal length of a lens to zoom in a scene, namely, a shooting scenario in which a distant scene is brought closer. The Zoom Out scenario is adjusting a focal length of a lens to zoom out a scene, namely, a shooting scenario in which a close scene is brought farther. However, in either the Zoom In scenario or the Zoom Out scenario, in response to the zoom operation of the user, the mobile phone may need to switch a camera used to expose an image, or may not need to switch a camera for exposing an image by the user. For example, in the Zoom In scenario, assuming that the user adjusts the zoom ratio value from 1.0x to 2.0x, the camera does not need to be switched, and the primary camera continues to be used for image exposure. For another example, in the Zoom In scenario, assuming that the user adjusts the zoom ratio value from 1.0x to 5.0x, the camera used for image exposure needs to be switched from the primary camera to the long-focus camera. For another example, in the Zoom Out scenario, assuming that the user adjusts the zoom ratio from 2.0x to 1.0x, the camera does not need to be switched, and the primary camera continues to be used for image exposure. For another example, in the Zoom Out scenario, assuming that the user adjusts the zoom ratio value from 1.0x to 0.8x, the camera used for image exposure needs to be switched from the primary camera to the wide-angle camera.

However, in either the Zoom In scenario or the Zoom Out scenario, when the zoom operation of the user relates to lens switching, a preview image frame obtained through exposure of an original lens (namely, a lens used for image exposure before lens switching) possibly cannot meet a new zoom ratio value.

For example, in the example shown in FIG. 6, the SAT module enables the zoom ratio value (namely, a new zoom ratio value) carried in the preview image frame request 10 to take effect on the image data of the preview image frame 4, but the image data of the preview image frame 4 obtained through exposure possibly cannot meet a case in which cropping is performed based on the zoom ratio value.

In a possible case, cropping cannot be completed because the cropping operation exceeds a limit of an interpolation algorithm related to image processing. In the Zoom In scenario, when the user adjusts the zoom ratio value quickly, if a lens switching event needs to occur (for example, the zoom ratio value adjusted from 1.0x to 40.0x is quickly, and the lens is switched from the primary camera to the long-focus camera), the IPE module needs to obtain a target image with relatively small field of view from a raw image with relatively large field of view through cropping. As shown in FIG. 9A, it is assumed that the preview image frame 4 is a raw image frame with relatively large field of view (it is assumed that a zoom ratio value is 1.0x), and the preview image frame 10 corresponding to the preview image frame request 10 is a target image frame with relatively small field of view (it is assumed that a zoom ratio value is 40.0x). In this case, if the IPE hardware obtains the target image frame from the preview image frame 4 through cropping based on the zoom ratio value 40.0x, the limit of the image interpolation algorithm is exceeded. Consequently, IPE hardware possibly cannot complete a corresponding cropping operation.

It should be noted that in the Zoom In scenario, when the user adjusts the zoom ratio value slowly (for example, adjusts the zoom ratio value from 1.0x to 1.1x, or even adjusts the zoom ratio value from 1.0x to 10.0x), or no lens switching event occurs, the IPE module may obtain a target image with relatively small field of view from a raw image with relatively large field of view through cropping, and there is no problem that a cropping operation cannot be completed.

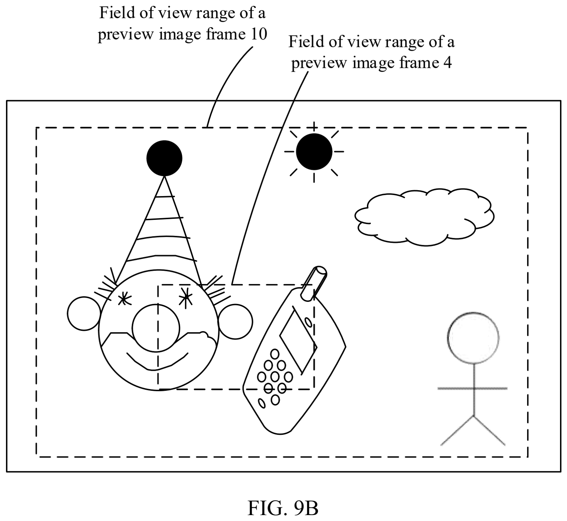

Another possible case is that cropping cannot be completed because field of view of a to-be-cropped image is relatively small. In the Zoom Out scenario, a target image with relatively large field of view needs to be obtained from a raw image with relatively small field of view through cropping. In particular, when lens switching needs to be performed, a cropping operation possibly cannot be completed. As shown in FIG. 9B, it is assumed that the preview image frame 4 is a raw image frame with relatively small field of view (for example, a zoom ratio value is 10.0x), and the preview image frame 10 corresponding to the preview image frame request 10 is a target image frame with relatively large field view (for example, a zoom ratio value is 1.0x). In this case, an operation of obtaining the target image frame from the preview image frame 4 through cropping based on the zoom ratio value 1.0x cannot be completed at all.

It should be noted that, in the Zoom Out scenario, if the user adjusts the zoom ratio slowly and lens switching is not related, because an image margin is reserved when the IFE module performs a cropping operation, the IPE module may obtain the target image with relatively large field of view from the raw image with relatively small field of view through cropping.

To resolve the foregoing problem, in this embodiment of this application, when the user performs the zoom operation, the multi-camera decision module in the HAL layer enables a target camera in advance by using the camera driver, to perform an image exposure operation by using both an original camera and the target camera, so as to obtain second preview image frame data that is collected by the original camera and the target camera and that correspond to a same preview image frame request. In this way, after extracting a zoom ratio value from the zoom ratio queue, if the SAT module determines that calculation of cropping data cannot be completed based on the zoom ratio value and first preview image frame data, or determines that the IPE module cannot complete a cropping operation based on a calculation result thereof, related cropping data is calculated again based on the zoom ratio value and the second preview image frame data, so that the IPE module completes the cropping operation on a second preview image frame based on a calculation result of the SAT module.

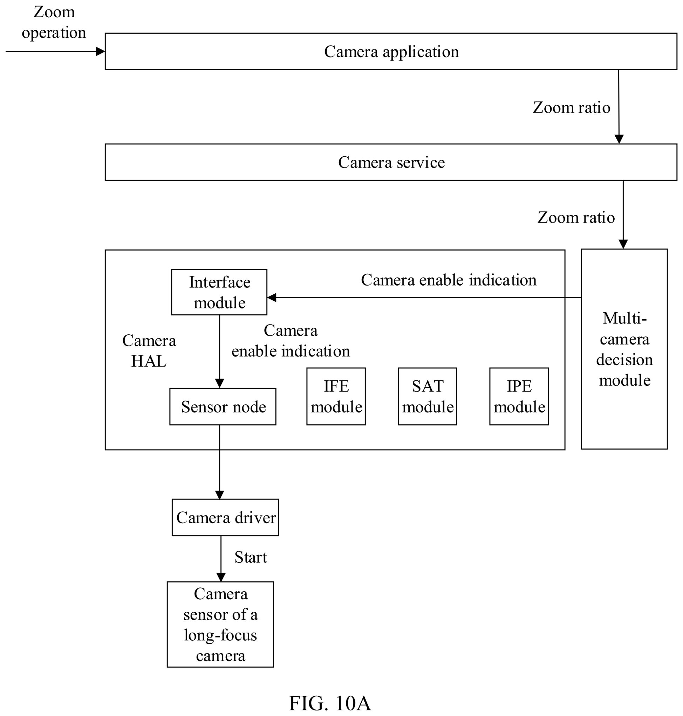

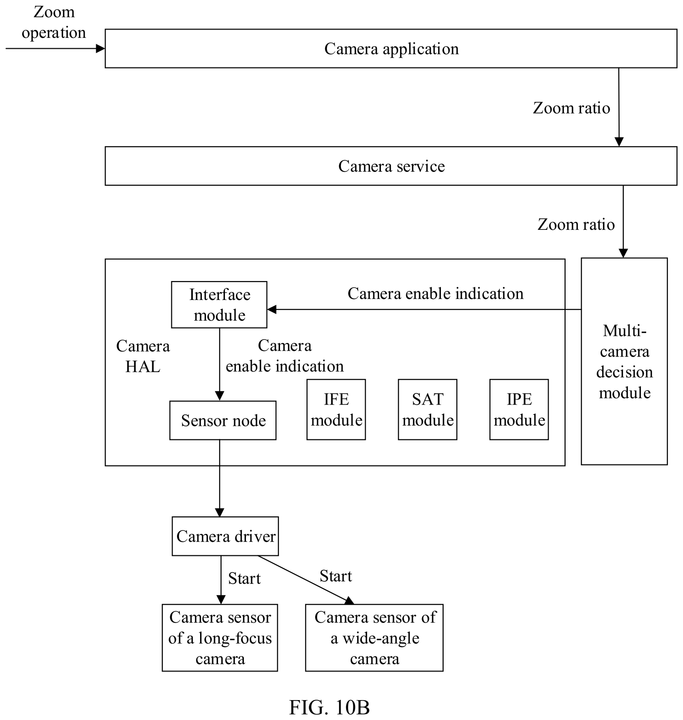

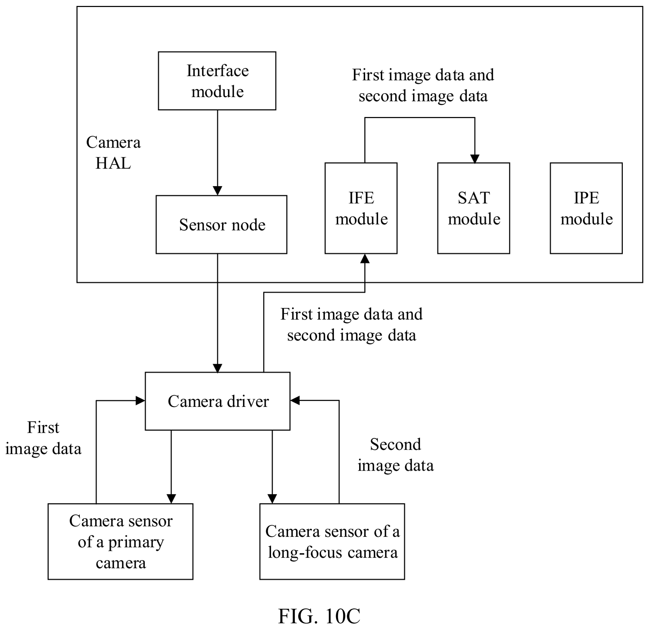

In a possible implementation, when the user performs a zoom operation, if the multi-camera decision module predicts, based on the zoom ratio value, that a to-be-switched camera is the target camera, the multi-camera decision module enables a camera sensor of the target camera in advance by using the camera driver. For example, as shown in FIG. 10A, when the user performs a zoom operation, the camera application sends a zoom ratio to the multi-camera decision module in real time by using the camera service. When the multi-camera decision module estimates, based on a preset decision algorithm, whether a camera that is actually used for image output needs to be switched in a current zoom scenario, and estimates that the camera that is actually used for image output needs to be switched to the target camera in the current zoom scenario, the multi-camera decision module enables the camera sensor of the target camera in advance by using the camera driver. For example, if the multi-camera decision module estimates, based on the preset decision algorithm, that the camera that is actually used for image output needs to be switched from the primary camera to the long-focus camera in the current zoom scenario, the multi-camera decision module enables a camera sensor of the wide-angle camera in advance by using the camera driver. In another possible implementation, when the user performs a zoom operation, and the multi-camera decision module predicts, based on a zoom ratio value, that a camera that is actually used for image output needs to be switched in a current zoom scenario, the multi-camera decision module enables camera sensors of other cameras (which have a same shooting direction as the camera that is currently used for image output) except the camera, that is currently used for image output, in advance by using the camera driver. For example, as shown in FIG. 10B, it is assumed that the camera that is currently used for image output is the primary camera. When the user performs a zoom operation, the camera application sends a zoom ratio to the multi-camera decision module in real time by using the camera service. If the multi-camera decision module estimates, based on a preset decision algorithm, whether a camera that is actually used for image output needs to be switched in a current zoom scenario, the multi-camera decision module enables camera sensors of other cameras except the primary camera in advance by using the camera driver, for example, enables camera sensors of the long-focus camera and the wide-angle camera in advance. When camera sensors of a plurality of cameras are enabled, and the Sensor node in the camera HAL processes a preview image frame request, the Sensor node controls, by using the camera driver, a camera sensor of each camera to perform exposure and image output. Referring to FIG. 10C, when both the camera sensor of the primary camera and the camera sensor of the long-focus camera are enabled, and the Sensor node in the camera HAL processes a preview image frame request, the Sensor node separately controls, by using the camera driver, the camera sensor of the primary camera and the camera sensor of the long-focus camera to perform exposure and image output, to obtain first image data collected by the camera sensor of the primary camera and second image data collected by the camera sensor of the long-focus camera.

It should be noted that only one of the plurality of cameras of the mobile phone is used as a camera that is currently used for image output. In this embodiment of this application, the multi-camera decision module may set and switch the camera that is currently used for image output. For example, when the camera that is currently used for image output is the primary camera, if the multi-camera decision module predicts, based on a zoom ratio value, that a camera that is actually used for image output needs to be switched in a current zoom scenario, and a to-be-switched camera is the long-focus camera, the multi-camera decision module may set the camera, that is currently used for image output, to the long-focus camera.

The first image data and the second image data correspond to a same preview image frame request, that is, correspond to a same shooting scenario. After obtaining the first image data and the second image data, the camera driver sends both the first image data and the second image data to the IFE module. In the first image data and the second image data, one group of image data is collected by the camera that is currently used for image output, and the other group of image data is collected by a camera that is not currently used for image output.

After receiving the first image data and the second image data, the IFE module performs preliminary cropping processing on image data collected by the camera that is currently used for image output, and sends one group of cropped image data and the other group of uncropped data to the SAT module. It is assumed that the first image data is image data collected by the camera that is currently used for image output. After performing preliminary cropping processing on the first image data, the IFE module sends, to the SAT module, the first image data that undergoes cropping processing and the second image data that does not undergo cropping processing.

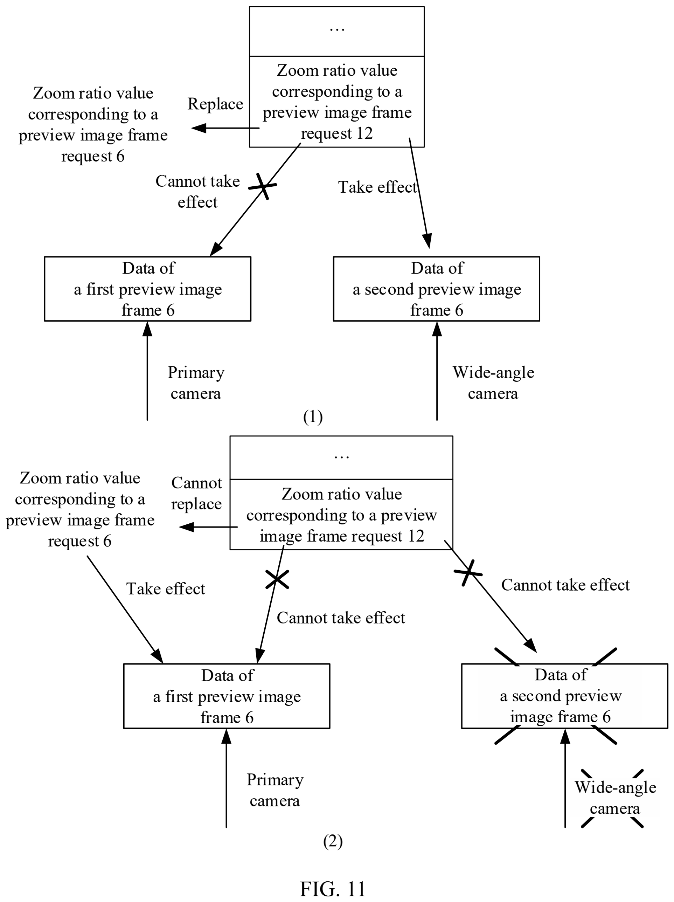

In a specific example, as shown in (1) in FIG. 11, when both the primary camera and the wide-angle camera are enabled, and the Sensor node processes the preview image frame request 6, the Sensor node controls, by using the camera driver, both the primary camera and the wide-angle camera to perform exposure and image output, so as to separately generate image data of a first preview image frame 6 and image data of a second preview image frame 6. The image data of the first preview image frame 6 is generated through exposure by using the primary camera, and the image data of the second preview image frame 6 is generated through exposure by using the wide-angle camera. When the camera that is currently used for image output is the primary camera, and the SAT module in the Offline Pipeline processes preview image frame data corresponding to the preview image frame request 6, a zoom ratio value corresponding to a preview image frame request 12 is read from the zoom ratio queue, and the zoom ratio value corresponding to the preview image frame request 12 is used to replace a zoom ratio value that corresponds to the preview image frame request 6 and that takes effect on image data corresponding to the preview image frame request 6. The SAT module determines, based on the zoom ratio value corresponding to the preview image frame request 12 and the image data (namely, the image data collected by the camera that is currently used for image output) of the first preview image frame 6, whether the IPE module can complete a cropping operation. If yes, the SAT module calculates cropping data and warping data based on the zoom ratio value and the image data of the first preview image frame 6, and sends a calculation result to the IPE module. If no, it indicates that the zoom ratio value corresponding to the preview image frame request 12 cannot take effect on the image data of the first preview image frame 6. In this case, the SAT module continues to determine whether a target camera (such as a wide-angle camera) corresponding to the zoom ratio value is enabled, and determine, if the target camera is enabled, whether image data that is of the second preview image frame 6 corresponding to the preview image frame request 6 and that is collected by the target camera is obtained. After the SAT module obtains the image data of the second preview image frame 6, the SAT module may enable the zoom ratio value corresponding to the preview image frame request 12 to take effect on the image data of the second preview image frame 6. In other words, the SAT module calculates cropping data and warping data based on the zoom ratio value corresponding to the preview image frame request 12 and the image data of the second preview image frame 6, and sends a calculation result to the IPE module, so that the IPE module performs cropping processing on the image data of the second preview image frame 6 based on the calculation result.

Still referring to (2) in FIG. 11, when the zoom ratio value corresponding to the preview image frame request 12 cannot take effect on the image data of the first preview image frame 6, assuming that the target camera (such as the wide-angle camera) is not enabled when the Sensor node processes the preview image frame request 6, the SAT module may not obtain the image data of the second preview image frame 6 corresponding to the preview image frame request 6, and therefore the zoom ratio value corresponding to the preview image frame request 12 cannot take effect in advance. In this case, the SAT module enables a zoom ratio value that currently takes effect most recently to take effect on the image data of the first preview image frame 6, that is, the SAT module enables a zoom ratio value that takes effect on image data of a preview image frame 5 to take effect on the image data of the first preview image frame 6. In this way, the SAT module calculates cropping data and warping data based on the image data of the first preview image frame 6 and the zoom ratio value that takes effect on the image data of the preview image frame 5, and sends a calculation result to the IPE module, so that the IPE module performs cropping processing on the image data of the first preview image frame 6 based on the calculation result.

It should be noted that, when the camera HAL receives a preview image frame request, if the preview image frame request carries no zoom ratio value, the camera HAL uses, when receiving the preview image frame request, a zoom ratio value corresponding to a previous preview image frame request as a zoom ratio value corresponding to the preview image frame request.

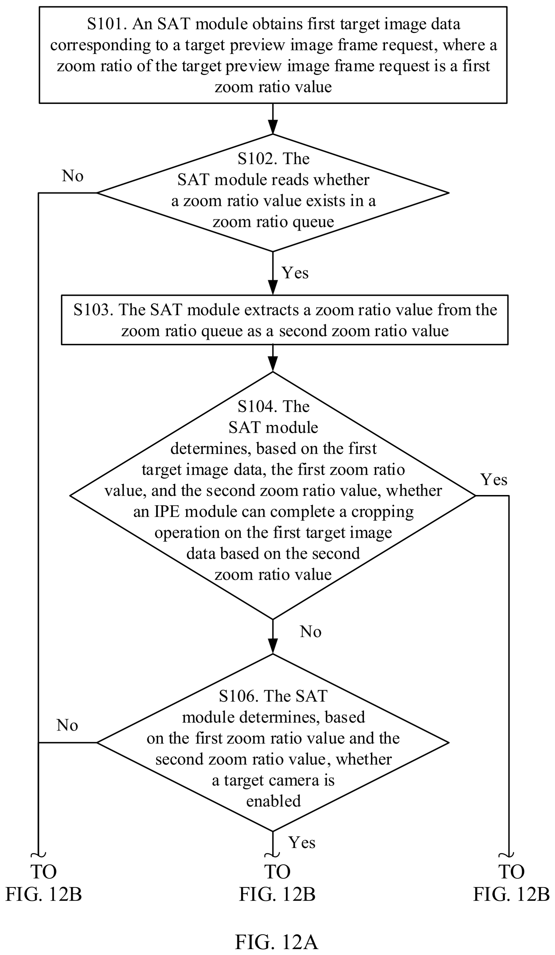

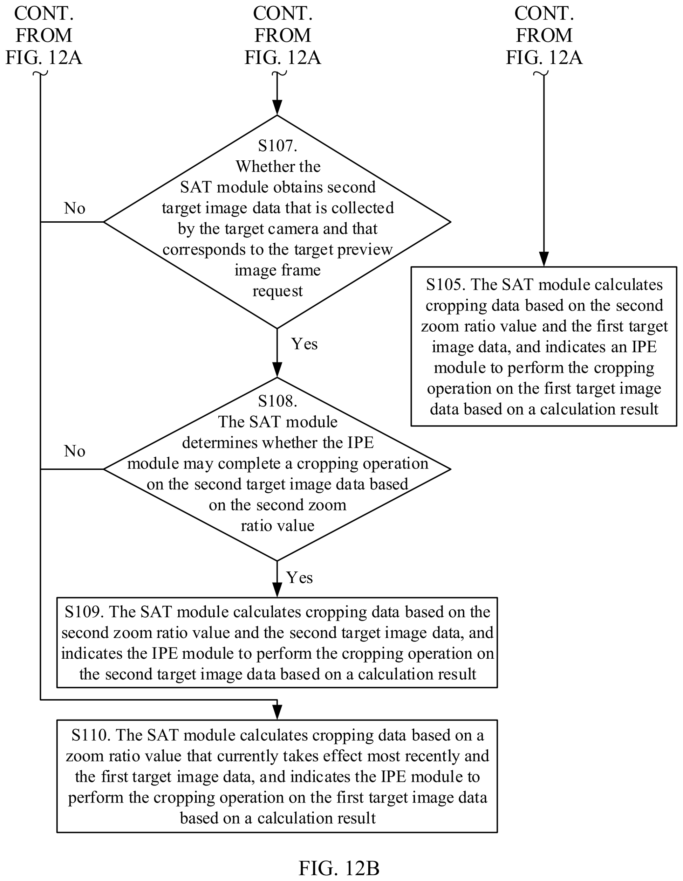

As shown in FIG. 12A and FIG. 12B, a procedure in which the SAT module in the Offline Pipeline processes preview image frame data specifically includes:
S101. The SAT module obtains first target image data corresponding to a target preview image frame request, where a zoom ratio of the target preview image frame request is a first zoom ratio value.

The target preview image frame request may be any preview image frame request delivered by the camera service to the camera HAL. If the target preview image frame request carries a zoom ratio value during delivery, the first zoom ratio value is the zoom ratio value carried in the target preview image frame request. If the target preview image frame request carries no zoom ratio value, the first zoom ratio value is a system default zoom ratio value or a zoom ratio value that currently takes effect most recently. When the target preview image frame request carries no zoom ratio value during delivery, if the target preview image frame request is the 1st preview image frame request delivered by the camera service to the camera HAL after the camera application is enabled, the first zoom ratio value is a system default zoom ratio value. Otherwise, the first zoom ratio value is a zoom ratio value corresponding to a previous preview image frame request.

The first target image data is image data obtained by the Sensor node in the camera HAL by controlling, by using the camera driver when processing the target preview image frame request, a camera sensor of a camera that is currently used for image output to perform exposure.

In addition, in the mobile phone, in addition to the camera sensor of the camera that is currently used for image output, if a camera sensor of another camera is also in an enabled state, for example, if a camera sensor of a target camera that is enabled in advance by the multi-camera decision module based on a zoom scenario is also in an enabled state, the Sensor node also controls, by using the camera driver when processing the target preview image frame request, the camera sensor of the another camera to perform exposure, so as to obtain second target image data corresponding to the target preview image frame request.

S102. The SAT module reads whether a zoom ratio value exists in a zoom ratio queue; if yes, performs S103; or if no, performs S110.

Before performing spatial alignment on image data based on a preset SAT algorithm to calculate cropping data, the SAT module first reads whether a zoom ratio value exists in the zoom ratio queue. The zoom ratio queue stores a zoom ratio value that needs to preferentially take effect. The SAT module first enables the zoom ratio value stored in the zoom ratio queue to preferentially take effect on currently processed image data, thereby shortening zoom response time, and improving zoom use experience of a user.

S103. The SAT module extracts a zoom ratio value from the zoom ratio queue as a second zoom ratio value.

When a zoom ratio value exists in the zoom ratio queue, the SAT module extracts a zoom ratio value from the zoom ratio queue, and preferentially performs effectiveness processing on the zoom ratio value. In this embodiment, the zoom ratio value extracted from the zoom ratio queue is temporarily referred to as the second zoom ratio value.

S104. The SAT module determines, based on the first target image data, the first zoom ratio value, and the second zoom ratio value, whether the IPE module can complete a cropping operation on the first target image data based on the second zoom ratio value; and if yes, performs S105; or if no, performs S106.

After extracting a zoom ratio value from the zoom ratio queue, the SAT module needs to determine whether the IPE module can complete the cropping operation based on the second zoom ratio value and the first target image data.

For example, if the second zoom ratio value is greater than the first zoom ratio value, and a difference between the second zoom ratio value and the first zoom ratio value is relatively large (for example, greater than a preset threshold), a corresponding cropping operation may exceed a limit of an image interpolation algorithm in image processing, and cannot be implemented. In this case, the SAT module may determine that the IPE module cannot complete the cropping operation based on the second zoom ratio value and the first target image data.

For another example, if the second zoom ratio value is less than the first zoom ratio value, and reserved margin image data of the first target image data cannot meet image field of view corresponding to the second zoom ratio value, because an image with relatively large field of view cannot be obtained from an image with relatively small field of view through cropping, the SAT module may determine that the IPE module cannot complete the cropping operation based on the second zoom ratio value and the first target image data.

S105. The SAT module calculates cropping data based on the second zoom ratio value and the first target image data, and indicates the IPE module to perform the cropping operation on the first target image data based on a calculation result.

When the SAT module determines that the IPE module may complete the cropping operation based on the second zoom ratio value and the first target image data, the SAT module calculates the cropping data and warping data based on the second zoom ratio value and the first target image data, and indicates the IPE module to perform the cropping operation and a warping operation on the first target image data based on the calculation result.

S106. The SAT module determines, based on the first zoom ratio value and the second zoom ratio value, whether the target camera is enabled; and if yes, performs S107; or if no, performs S110.

When the SAT module determines that the IPE module cannot complete the cropping operation based on the second zoom ratio value and the first target image data, if the first zoom ratio value falls within a zoom range of a first camera and the second zoom ratio value falls within a zoom range of a second camera, the SAT module determines that the second camera corresponding to the second zoom ratio is the target camera, and determines whether the target camera is enabled. When the SAT module determines that the IPE module cannot complete the cropping operation based on the second zoom ratio value and the first target image data, if the first zoom ratio value falls within a zoom range of a first camera, the second zoom ratio value also falls within the zoom range of the first camera, and the second zoom ratio value is less than the first zoom ratio value, a current zoom scenario is a Zoom Out scenario, and the SAT module determines that a third camera is the target camera, and determines whether the target camera is enabled. A zoom ratio value corresponding to the third camera (such as a wide-angle camera) is less than a zoom ratio value corresponding to the first camera (such as a primary camera).

S107. Whether the SAT module obtains second target image data that is collected by the target camera and that corresponds to the target preview image frame request; and if yes, S108 is performed; or if no, S110 is performed.

When the second zoom ratio value cannot take effect on the first target image data, if the SAT module obtains the second target image data that is collected by the target camera and that corresponds to the target preview image frame request, the SAT module may enable the second zoom ratio value to take effect on the second target image data, to calculate corresponding cropping data.

When the second zoom ratio value cannot take effect on the first target image data, if the SAT module does not obtain the second target image data that is collected by the target camera and that corresponds to the target preview image frame request, the second zoom ratio value cannot take effect in advance instead of the zoom ratio value that currently takes effect most recently. In this case, the SAT module enables the zoom ratio value (which may be the first zoom ratio value, or may be another zoom ratio value) that currently takes effect most recently to take effect on the first target image data, to calculate corresponding cropping data.

S108. The SAT module determines whether the IPE module may complete a cropping operation on the second target image data based on the second zoom ratio value; and if yes, performs S109; or if no, performs S110.

For example, the SAT module determines whether the limit of the image interpolation algorithm in image processing is exceeded if the IPE module performs the cropping operation on the second target image data based on the second zoom ratio value. If yes, the SAT module determines that the IPE module cannot complete the cropping operation on the second target image data based on the second zoom ratio value. If no, the SAT module determines that the IPE module can complete the cropping operation on the second target image data based on the second zoom ratio value. S109. The SAT module calculates cropping data based on the second zoom ratio value and the second target image data, and indicates the IPE module to perform the cropping operation on the second target image data based on a calculation result.

In this case, the camera sensor of the target camera corresponding to the zoom scenario is enabled in advance. Therefore, when the second zoom ratio value that needs to take effect in advance cannot take effect on the first target image data, the SAT module enables the second zoom ratio value to take effect on the second target image data collected by the target camera, to ensure that the second zoom ratio can take effect in advance, and reduce a response delay of the zoom operation.

S110. The SAT module calculates cropping data based on the zoom ratio value that currently takes effect most recently and the first target image data, and indicates the IPE module to perform the cropping operation on the first target image data based on a calculation result.

The zoom ratio value that currently takes effect most recently is a zoom ratio value that takes effect on image frame data corresponding to a previous preview image frame request of the target preview image frame request.

In a case, when the SAT module processes the first target image data of the target preview image frame request, if the SAT module reads that no zoom ratio value exists in the zoom ratio queue, the SAT module calculates the cropping data based on the zoom ratio value that currently takes effect most recently and the first target image data, and indicates the IPE module to perform the cropping operation on the first target image data based on a calculation result.

In a case, when the SAT module processes the first target image data of the target preview image frame request, if the SAT module reads the second zoom ratio value from the zoom ratio queue, the second zoom ratio value cannot take effect on the first target image data, and the target camera is not enabled or the SAT module does not obtain the second target image data that is collected by the target camera and that corresponds to the target preview image frame request or the second zoom ratio value cannot take effect on the second target image data, the SAT module calculates the cropping data based on the zoom ratio value that currently takes effect most recently and the first target image data, and indicates the IPE module to perform the cropping operation on the first target image data based on a calculation result.

In this embodiment of this application, when receiving a preview image frame request that carries a zoom ratio value, the camera HAL stores, in the zoom ratio queue, the zoom ratio value carried in the preview image frame request, to enable the zoom ratio value to preferentially take effect in the Offline Pipeline. This breaks a current situation in which a preview image frame request is bound to a zoom ratio value in the Android architecture and the camera HAL architecture, so that an effectiveness link of the zoom ratio value skips exposure processing of the Sensor node and processing of the IFE module, thereby greatly reducing a zoom response delay of a system. When the zoom operation of the user is a sliding operation (for example, sliding the zoom control with one finger or sliding the preview interface with two fingers), reducing a zoom response delay of the system can effectively improve responsiveness of the zoom operation of the user. When the zoom operation of the user is a tap operation (for example, tapping the zoom control), shortening an effectiveness link of a zoom ratio value can effectively increase a response speed of the system to the zoom operation of the user.

In this way, in zoom scenarios related to, for example, FIG. 1A(1) and FIG. 1A(2), FIG. 1B(1) and FIG. 1B(2), and FIG. 1C(1) and FIG. 1C(2), a response delay of a system of the mobile phone to the zoom operation (for example, tapping the zoom control, sliding the zoom control, and sliding the preview interface with two fingers) of the user is relatively low. Specifically, a time difference between the zoom operation (or referred to as a ratio adjustment operation), that is of the user and that adjusts a preview interface of the camera application of the mobile phone to a specific zoom ratio, and display of a preview image corresponding to the zoom ratio on a screen of the mobile phone is relatively small.

In addition to the foregoing mentioned application scenario in which the user performs zoom adjustment in a photographing preview interface of the camera application, the technical solution provided in this embodiment of this application is also applicable to an application scenario in which the user performs zoom adjustment in a video recording preview interface of the camera application, an application scenario in which the user performs zoom adjustment after video recording is enabled on the camera application, another application scenario related to camera zoom, and the like. In the another application scenario related to camera zoom, an implementation of the zoom response method provided in this embodiment of this application is similar to the foregoing description, and details are not described herein again.

An embodiment further provides a computer storage medium. The computer storage medium stores computer instructions. When the computer instructions are run on an electronic device, the electronic device is enabled to perform the steps of the related method to implement the zoom response method in the foregoing embodiments.

An embodiment further provides a computer program product. When the computer program product runs on a computer, the computer is enabled to perform the foregoing related steps to implement the zoom response method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the zoom response method in the foregoing method embodiments.

The electronic device (for example, a mobile phone), the computer storage medium, the computer program product, or the chip provided in the embodiments is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

It may be understood by a person skilled in the art from the foregoing descriptions of the implementations that, for convenience and brevity of description, division of the foregoing functional modules is merely used as an example for description. In an actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and methods may be implemented in other manners. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The foregoing embodiments are merely intended to describe the technical solutions in this application, but not intended to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions in the embodiments of this application.

## Claims

1. An image processing method, applied to an electronic device, wherein the method comprises:
obtaining first image data, wherein the first image data corresponds to a first preview image frame request, and a zoom ratio corresponding to the first preview image frame request is a first zoom ratio value;
reading a second zoom ratio value, wherein the second zoom ratio value corresponds to a second preview image frame request, and a generation time of the second preview image frame request is later than a generation time of the first preview image frame request; and
processing the first image data based on the second zoom ratio value.

2. The method according to claim 1, wherein before the reading a second zoom ratio value, the method further comprises:
receiving a zoom operation to generate the second preview image frame request.

3. The method according to claim 1, wherein the electronic device comprises a display screen, and the method further comprises:
displaying a first preview image frame in a preview interface of the display screen, wherein the first preview image frame is obtained by the electronic device by processing the first image data by replacing the first zoom ratio value with the second zoom ratio value.

4. The method according to claim 1, wherein the method further comprises:
determining that a zoom ratio value exists in a zoom ratio queue, and determining the second zoom ratio value from the zoom ratio queue, wherein
the zoom ratio queue is a first-in first-out queue.

5. The method according to any one of claims 1-4, wherein the electronic device comprises a first camera, the first image data is collected by the first camera, and the processing the first image data based on the second zoom ratio value comprises:
if the first image data meets a condition of being processed based on the second zoom ratio value, processing the first image data based on the second zoom ratio value.

6. The method according to claim 5, wherein the electronic device further comprises a second camera, and the method further comprises:
if the first image data does not meet the condition of being processed based on the second zoom ratio value, determining whether the second camera collects second image data; and
if the second camera collects the second image data, processing the second image data based on the second zoom ratio value.

7. The method according to claim 5, wherein the electronic device further comprises a second camera, and the method further comprises:
if the second camera does not collect second image data, processing the first image data based on a current zoom ratio value, wherein
the current zoom ratio value is used to indicate a zoom ratio value that takes effect most recently.

8. The method according to any one of claims 5 to 7, wherein that the first image data meets a condition of being processed based on the second zoom ratio value comprises:
determining, based on the first zoom ratio value, the second zoom ratio value, and the first image data, that target cropping is capable of being completed on the first image data based on the second zoom ratio value.

9. The method according to any one of claims 5 to 8, wherein
the first camera is different from the second camera, and the second camera is a long-focus camera or a wide-angle camera.

10. The method according to any one of claims 6 to 9, wherein
the zoom operation is received, and the second camera is started.

11. The method according to any one of claims 2 to 10, wherein
the zoom operation comprises an operation of tapping a zoom control, an operation of sliding the zoom control, and an operation of sliding the preview interface with two fingers.

12. An electronic device, wherein the electronic device comprises:
one or more processors;
a memory; and
one or more computer programs, wherein the one or more computer programs are stored in the memory, and when the computer programs are executed by the one or more processors, the electronic device is enabled to perform the method according to any one of claims 1-11.

13. A chip system, applied to an electronic device comprising a display screen, wherein the chip system comprises a processing circuit and a transceiver pin, and when the transceiver pin and the processing circuit communicate with each other by using an internal connection path, the processing circuit performs the method according to any one of claims 1-11, to control the receive pin to receive a signal and control the transmit pin to send a signal.

14. A computer-readable storage medium, comprising a computer program, wherein when the computer program is run on an electronic device, the electronic device is enabled to perform the method according to any one of claims 1-11.
